# EUROPÄISCHE PATENTSCHRIFT

(11) **EP 1 776 240 B1**
(45) Veröffentlichungstag und Bekanntmachung des Hinweises auf die Patenterteilung: **10.12.2008**
(21) Anmeldenummer: 05758793.3
(22) Anmeldetag: 27.06.2005
(51) Int. Cl.: B42D 15/00, B42D 15/10, B41M 7/00

(54) **SICHERHEITSELEMENT UND VERFAHREN ZU SEINER HERSTELLUNG**
SECURITY ELEMENT AND METHOD FOR PRODUCING THE SAME
ELEMENT DE SECURITE ET PROCEDE POUR LE REALISER

(30) Priorität: 14.07.2004 DE 102004034199; 23.07.2004 DE 102004035979
(43) Veröffentlichungstag der Anmeldung: 25.04.2007
(73) Patentinhaber: Giesecke & Devrient GmbH, 81677 München (DE)
(72) Erfinder: HOFFMÜLLER, Winfried, 83646 Bad Tölz (DE); SANDER, Kerstin, 83727 Schliersee (DE)
(74) Vertreter: Zeuner, Stefan
(86) Internationale Anmeldenummer: PCT/EP2005/006893
(87) Internationale Veröffentlichungsnummer: WO 2006/005434

(56) Entgegenhaltungen:
- EP-A- 1 429 212
- WO-A-93/05124
- DE-A1- 4 132 476
- US-A- 5 695 589
- US-A1- 2003 213 550
- US-B1- 6 306 929

## Beschreibung

Die Erfindung betrifft ein Sicherheitselement für Sicherheitspapiere, Wertgegenstände oder dergleichen mit einem Substrat und einer bei Raumtemperatur im Wesentlichen tackfreien Beschichtung. Die Erfindung betrifft ferner ein Verfahren zur Herstellung eines derartigen Sicherheitselements. Darüber hinaus betrifft die Erfindung ein Sicherheitspapier und einen Wertgegenstand mit einem derartigen Sicherheitselement sowie ein Verfahren zur Herstellung eines Sicherheitspapiers und eines Wertgegenstands mit einem solchen Sicherheitselement.

Wertgegenstände, wie etwa Markenartikel oder Wertdokumente, werden zur Absicherung oft mit Sicherheitselementen ausgestattet, die eine Überprüfung der Echtheit des Wertgegenstands gestatten und die zugleich als Schutz vor unerlaubter Reproduktion dienen. Wertgegenstände im Sinne der vorliegenden Erfindung sind insbesondere Banknoten, Aktien, Ausweise, Kreditkarten, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen und dergleichen. Der Begriff "Wertgegenstand" schließt im Folgenden alle derartigen Gegenstände, Dokumente und Produktsicherungsmittel ein. Unter "Sicherheitspapier" wird hingegen die noch nicht umlauffähige Vorstufe zu einem Wertdokument verstanden.

Es ist bekannt, in Sicherheitspapieren oder Wertdokumenten, wie beispielsweise Banknoten, Wertpapieren, Ausweiskarten, Sicherheitselemente in Form von z.B. Sicherheitsfäden oder Patches einzulagern.

Bei fast allen Sicherheits- und Banknotenpapieren wird heute als Sicherheitsfaden ein mit Heißsiegellack beschichteter Faden auf der Papiermaschine in das Papier eingebracht. Der Heißsiegellack dient dabei der verbesserten Verankerung des Fadens im Papier. Heißsiegellacke werden bei der Banknotenherstellung außerdem zur Applikation von Hologrammen und Hologrammstreifen eingesetzt.

Beim Aufbringen von Sicherheitselementen mithilfe von Heißsiegellacken wird zumindest eines der zu verbindenden Substrate mit einer lösungsmittelbasierten Polymerlösung oder einer wässrigen Lösung oder Dispersion beschichtet. Nach der physikalischen Trocknung liegt eine klebfreie Oberfläche vor. Bei Temperatureinwirkung schmilzt die siegelfähige Masse auf und wirkt als Klebstoff.

Beispielsweise offenbart die US 4,758,296 ein auf einem Trägermaterial aufgebrachtes Mehrschichtelement, bei dem ein Prägehologramm mithilfe einer mit flüssigem Harz versehenen Prägematrize erzeugt wird. Für den Transfer auf ein Dokument wird der Schichtaufbau mit einer Heißschmelzkleberschicht versehen, die unter Einwirkung von Wärme und Druck aktiviert wird.

Nachteilig an dem Verfahren gemäß der US 4,758,296 ist vor allem die Tatsache, dass beim Aufschmelzen der Heißsiegellacke ein erheblicher Temperatureintrag in das Substrat erforderlich ist, wodurch die Qualität des Substrats (z.B. Papier) stark beeinträchtigt wird. Außerdem müssen Banknoten und andere Wertdokumente eine genügende Heißwasserbeständigkeit aufweisen, was wiederum einen ausreichend hohen Schmelzpunkt des Heißsiegelsystems erforderlich macht.

Extrem nachteilig in Bezug auf die Fälschungssicherheit der mit den Hologrammelementen gemäß der US 4,758,296 ausgestatteten Wertdokumente ist die Tatsache, dass das Hologrammelement durch ein erneutes Erwärmen des Heißklebers von dem Dokument wieder abgelöst und auf ein anderes Dokument übertragen werden kann. Zudem weisen beispielsweise Heißsiegellacksysteme auf 2-Komponenten-Basis, wie sie häufig verwendet werden, einen lagerzeitabhängigen Schmelzpunkt auf, was unerwünscht ist.

Daneben kommen bei der Banknotenherstellung strahlenhärtbare Klebstoffe zur Applikation von Hologrammen oder zur Verankerung von Sicherheitsfäden zum Einsatz. Diese Klebstoffe werden ohne Lösungsmittel (als so genanntes 100%-System) flüssig aufgetragen und kurz vor, während oder unmittelbar nach dem Zusammenführen der Substrate durch Strahlung, insbesondere ultraviolette (UV-)Strahlung oder Elektronenstrahlung, vernetzt.

Ein solches 100%-UV-System ist beispielsweise in der WO 93/05124 beschrieben. Dabei wird ein Trägermaterial mit einem auf das Substrat aufgedruckten Klebstoff in Kontakt gebracht, während dieser mittels UV-Strahlung ausgehärtet wird.

Auch in der WO 94/19201 werden verschiedene solcher Klebstoffe beschrieben, u.a. ein kationisch reagierender UV-Klebstoff, der aufgedruckt und durch Bestrahlung mit UV-Strahlung aktiviert wird, sowie ein blaulichthärtender Klebstoff, der nach In-Kontakt-Bringen von Transfermaterial und Substrat mit Blaulicht bestrahlt wird.

Solche flüssig strahlenhärtenden Systeme weisen allerdings den Nachteil auf, dass sie nicht offline appliziert werden können, da sie sofort zum Verblocken der Bahn und zum Klebstoffübertrag führen würden. Daneben enthalten solche 100%-Systeme Monomere (niedermolekulare Verbindungen als Reaktivverdünner), die sich durch Wegschlagen ins Papier der Härtung mittels UV-Strahlung und damit der Fixierung entziehen können. Diese nicht vemetzten, oft toxikologisch bedenklichen Verbindungen können dann nachträglich bei Kontakt mit Flüssigkeiten wieder aus dem Papier extrahiert und über die Haut aufgenommen werden.

US 2003/0213550 A1 zeigt auch der Stand der Technik.

Ausgehend davon liegt der vorliegenden Erfindung die Aufgabe zugrunde, ein Sicherheitselement der eingangs genannten Art bereitzustellen, das die Nachteile des Standes der Technik vermeidet.

Diese Aufgabe wird durch das Sicherheitselement mit den Merkmalen des Hauptanspruchs gelöst. Ein Sicherheitspapier, ein Wertgegenstand, ein Verfahren zur Herstellung eines Sicherheitselements sowie ein Verfahren zur Herstellung eines Sicherheitspapiers bzw. eines Wertgegenstands sind Gegenstand der nebengeordneten Ansprüche. Weiterbildungen der Erfindung sind Gegenstand der Unteransprüche.

Gemäß der Erfindung ist bei dem Sicherheitselement der eingangs genannten Art das Substrat zumindest teilweise mit einer niedrigschmelzenden, bei Raumtemperatur im Wesentlichen tackfreien Beschichtung ausgestattet. Die Beschichtung enthält wenigstens eine strahlenvernetzbare Komponente und nach Bestrahlung hochschmelzend bis unschmelzbar ist.

Die erfindungsgemäße Beschichtung kann in Form einer Lösung, einer Emulsion oder in Form einer Dispersion aufgetragen werden. Die in dieser Form aufgetragene strahlenvernetzbare Beschichtung schmilzt bei niedrigen Temperaturen und dringt in das Substrat ein, was zu einer leichten Verarbeitbarkeit führt. Das erfindungsgemäße Sicherheitselement ist folglich mit einem niedrigschmelzenden, bei Raumtemperatur jedoch im Wesentlichen tackfreien System ausgestattet. Die Anwesenheit einer strahlenvernetzbaren Komponente in der Beschichtung erlaubt es, nach der Applikation der Beschichtung eine Vernetzung durch Bestrahlung durchzuführen. Dabei entsteht ein hochschmelzendes bis unschmelzbares System, wodurch eine hohe Stabilität und insbesondere eine genügende Heißwasserbeständigkeit z.B. beim Waschmaschinentest erreicht wird.

Bei der Vernetzung verbessert sich die Haftung auf dem Substrat, z.B. einer druckvorbehandelten Folie, und die innere Festigkeit der Beschichtung steigt an. Die unmittelbar vor, während und unmittelbar nach der Härtung herrschende Temperatur der Beschichtung ist ein wichtiger, den erzielbaren Vernetzungsgrad bestimmender Parameter. Bei höherer Temperatur kann ein höherer Vernetzungsgrad erzielt werden, da die Beweglichkeit der reaktiven Gruppen höher ist.

Die üblichen UV-Lacke sind vor der Vernetzung flüssig und erzeugen eine erhebliche Reaktionswärme, da viele reaktive Gruppen auf engem Raum vorliegen. Die strahlen- und insbesondere UV-härtbaren Beschichtungen gemäß der vorliegenden Erfindung hingegen bestehen aus Molekülen mit relativ hohem Molekulargewicht und sind bei Raumtemperatur fest. Durch die geringere Anzahl reaktiver Gruppen pro Volumen-/Masseneinheit ist die Reaktionswärme geringer. Dadurch spielt der äußere Wärmeeintrag bei der Vernetzung eine größere Rolle. Durch die Temperatur bei der Härtung können daher die mechanischen Eigenschaften der Beschichtung gesteuert werden.

Die auf diese Weise beschichteten, noch nicht vernetzten Sicherheitselemente sind lagerfähig ohne Schmelzpunktänderung. So sind beispielsweise mit der bei Raumtemperatur im Wesentlichen tackfreien Beschichtung ausgestattete Folien aufwickelbar und ohne Änderung des Schmelzpunkts über längere Zeit lagerfähig.

Gemäß einer vorteilhaften Weiterbildung der Erfindung liegt die bei Raumtemperatur im Wesentlichen tackfreie Beschichtung zumindest physikalisch getrocknet vor. Durch eine leichte Temperaturerhöhung auf beispielsweise 80°C werden eventuell vorhandenes Lösungsmittel und/oder Wasser aus der strahlungshärtbaren Dispersion, Lösung oder Emulsion ausgetrieben. Diese physikalische Trocknung bewirkt, dass die Beschichtung bei Raumtemperatur im Wesentlichen tackfrei vorliegt.

Im Rahmen der vorliegenden Beschreibung bedeutet der Begriff "im Wesentlichen tackfrei" auch im Wesentlichen klebfrei im Sinne einer glatten, im Wesentlichen nicht klebrigen Oberfläche. Die Überprüfung kann dabei durch folgenden Test erfolgen: Beschichtete Folienstücke von etwa 100 cm² werden gestapelt und mit einem Gewicht von 10 kg belastet und 72 Stunden bei 40°C gelagert. Lassen sich die Folienstücke danach ohne Beschädigung der Beschichtungen mühelos voneinander trennen, ist die Beschichtung als im Wesentlichen tackfrei anzusehen.

Das Substrat des erfindungsgemäßen Sicherheitselements kann grundsätzlich in jeder beliebigen Form vorliegen. So kann das erfindungsgemäße Sicherheitselement z.B. aus Fasern bestehen, die mit der bei Raumtemperatur im Wesentlichen tackfreien Beschichtung ausgestattet sind. Gemäß einer vorteilhaften Variante der Erfindung handelt es sich aber um ein flächiges Substrat mit zwei gegenüberliegenden Hauptflächen. Bevorzugt ist nur eine Hauptfläche des Substrats mit einer bei Raumtemperatur im Wesentlichen tackfreien Beschichtung versehen.

Grundsätzlich reicht es aus, wenn eine Hauptfläche des Substrats teilweise mit der bei Raumtemperatur im Wesentlichen tackfreien Beschichtung ausgestattet ist. Für eine optimale Einbettung des Sicherheitselements in ein Sicherheitspapier oder in ein Wertdokument ist es aber zweckmäßig, wenn die Hauptfläche(n) des Substrats vollflächig mit der bei Raumtemperatur im Wesentlichen tackfreien Beschichtung versehen ist. Je nach der Größe des Sicherheitselements kann es jedoch auch ausreichen, dass nur ein Teilbereich des Substrats mit der bei Raumtemperatur im Wesentlichen tackfreien Beschichtung versehen ist.

Wird das Sicherheitselement vollständig in das Sicherheitspapier eingebettet, hat es sich als besonders zweckmäßig herausgestellt, wenn beide Hauptflächen des Substrats mit der bei Raumtemperatur im Wesentlichen tackfreien Beschichtung versehen sind. Diese Variante kommt insbesondere dann zum Einsatz, wenn das Sicherheitselement nach Art eines Fenstersicherheitsfadens in ein Sicherheitspapier oder Wertdokument eingebettet wird. Die Hauptflächen können dabei sowohl mit gleichartigen Beschichtungen als auch mit unterschiedlichen Beschichtungen versehen sein.

Gemäß einer weiteren bevorzugten Ausführungsform der vorliegenden Erfindung weist das Sicherheitselement eine Dicke von 1 µm bis 100 µm, bevorzugt eine Dicke von 2 µm bis 50 µm auf. Dabei handelt es sich um die bei der Ausstattung von Wertdokumenten und Sicherheitspapieren mit Sicherheitselementen leicht handhabbaren Dicken der Sicherheitselemente.

Bevorzugt ist das Substrat des erfindungsgemäßen Sicherheitselements mehrlagig und/oder flexibel ausgestaltet. Die mit der Mehrlagigkeit des Sicherheitselements verbundenen Vorteile werden nachfolgend noch näher beschrieben. Die Flexibilität des Sicherheitselements ist häufig erwünscht, da auch die mit dem Sicherheitselement ausgestatteten Wertdokumente, wie z.B. Banknoten oder Urkunden, in der Regel flexibel sind.

Die bei Raumtemperatur im Wesentlichen tackfreie Beschichtung wird bevorzugt als Lösung, Emulsion oder Dispersion auf das Substrat aufgetragen und anschließend physikalisch getrocknet. Besonders bevorzugt wird eine wässrige Dispersion verwendet.

Eine solche wässrige Dispersion kann direkt auf ein Substrat, auf eine entsprechend druckvorbehandelte oder geprimerte, d.h. mit Primer versehene Folie (z.B. Hostaphan RNK 2600, Mitsubishi Polyester Film) oder in den Fällen, in denen zwischen dem Substrat und der bei Raumtemperatur im Wesentlichen tackfreien Beschichtung weitere Schichten vorliegen, auf diesen aufgetragen werden. Die so erhaltene Folie kann aufgewickelt, transportiert und gelagert werden. Durch Druck und Temperatur (ca. 100°C bis 160°C) kann die Folie auf Papier, eine weitere Folie oder ein Polymer appliziert werden.

Gemäß einer weiteren bevorzugten Ausführungsform der vorliegenden Erfindung ist die Dispersion ausgewählt aus der Gruppe, bestehend aus aliphatischen Polyurethandispersionen, aromatischen Polyurethandispersionen, Acrylaten, anionischen acrylatmodifizierten Polyurethandispersionen, Polyurethan-Polyetheracrylaten und deren Gemischen.

Besonders gut geeignet sind acrylierte Polyurethandispersionen. Als Beispiele solcher acrylierten Polyurethandispersionen sind DW7770, DW7773, DW7825, DW7772, DW7849 (UCB, Surface Specialties) und Actilane 340 E-poxynovolacacrylat in Butoxyethyiacetat (Akzo) zu nennen.

Weitere strahlenhärtbare Dispersionen sind beispielsweise NeoRad R-440 (NeoResins), NeoRad R-441 (NeoResins), NeoRad R-445 (NeoResins), Laromer LR 8949 (BASF), Laromer LR 8983 (BASF), Laromer LR 9005 (BASF), LUX 101 UV-Dispersion (Alberdingk), LUX 241 UV-Dispersion (Alberdingk) LUX 308 UV-Dispersion (Alberdingk), LUX 352 UV-Dispersion (Alberdingk), LUX 370 UV-Dispersion (Alberdingk), LUX 390 UV-Dispersion (Alberdingk), LUX 399 UV-Dispersion (Alberdingk), LUX 331 UV-Dispersion (Alberdingk), LUX 338 UV-Dispersion (Alberdingk), Halwedrol UV 95/92 W (Hüttenes-Albertus), Halwedrol UV 14/40 W (Hüttenes-Albertus), Halwedrol UV-TN 6711/40 W (Hüttenes-Albertus), Halwedrol UV 65/40 W (Hüttenes-Albertus), Halwedrol UV-TN 7561-3/40 W (Hüttenes-Albertus), Halwedrol UV-TN 7157/40 W (Hüttenes-Albertus) und Bayhydrol UV VP LS 2280 (Bayer).

Unter den genannten Dispersionen befinden sich anionische und nicht ionische Dispersionen. Bei den meisten dieser Dispersionen handelt es sich um aliphatische Polyurethandispersionen (z.B. aliphatische Polyesterpolyurethane), daneben aber auch um aromatische Polyurethandispersionen und Copolymere (z.B. Dispersionen auf Basis von aliphatischen Polyurethan- und Acrylsäureester-Copolymeren), um Acrylate (Acrylsäureester-Copolymere) sowie anionische acrylatmodifizierte UV-härtende Polyurethandispersionen oder auch Polyurethan-Polyetheracrylate.

Bevorzugt liegt der Festkörperanteil der Dispersion zwischen 30 Gew.-% und 60 Gew.-%, vorzugsweise zwischen 35 Gew.-% und 50 Gew.-%. Durch Verdünnen kann der Festkörpergehalt aber nach Bedarf eingestellt werden.

Handelsübliche Dispersionen weisen einen Festkörpergehalt zwischen 38 Gew.-% und 51 Gew.-% auf. Aufgrund der einfachen Verfügbarkeit werden solche Dispersionen im Rahmen der vorliegenden Erfindung bevorzugt.

Die in der Beschichtung enthaltene strahlenvernetzbare Komponente kann bevorzugt durch ultraviolette Strahlung oder durch Elektronenstrahlung vernetzt werden. Vom spektralen Bereich her sind eisendotierte Strahler besonders gut geeignet. Alternativ können Strahler mit undotiertem Quecksilber oder Strahler mit Gallium-Dotierung verwendet werden. Hg-Strahler weisen bei Härtung durch zu applizierende Elemente hindurch allerdings einen etwas ungünstigeren Spektralbereich auf, während Ga-Strahler eine schlechtere Oberflächenhärtung bewirken.

Gemäß einer bevorzugten Ausführungsform enthält die bei Raumtemperatur im Wesentlichen tackfreie Beschichtung einen Photoinitiator. Die Vernetzung kann mithilfe eines Photoinitiators auf besonders einfache Weise gestartet und kontrolliert werden. Bevorzugte Beispiele solcher Photoinitiatoren sind Darocur 4265 (Ciba), Darocur 1173 (Ciba), Irgacure 500 (Ciba), Irgacure 184 (Ciba), Esacure KIP 100 F (Lamberti) und Irgacure 2959 (Ciba).

Besonders bevorzugt handelt es sich bei dem Photoinitiator um einen wasserlöslichen Photoinitiator, einen in Wasser dispergierbaren Photoinitiator oder um einen mittels wasserkompatiblen Lösungsmitteln in Wasser löslichen Photoinitiator. Als Beispiel für einen wasserlöslichen Initiator sei Irgacure 2959 (Ciba) genannt. Ein in Wasser dispergierbarer (oder vordispergierter) Initiator ist z.B. Irgacure 819 DW (Ciba). Als ein mithilfe von weiteren wasserkompatiblen Lösungsmitteln löslicher Initiator sei beispielhaft Lucirin TPO (BASF) genannt.

Im Falle der mit Wasser mischbaren Lösungsmittel muss bei der Verarbeitung gegebenenfalls ein erhöhter VOC-Anteil in Kauf genommen werden, da in der fertigen Dispersion ein Lösungsmittelanteil vorhanden sein sollte, der das Ausfallen der eingesetzten Photoinitiatoren verhindert. Ist dies nicht möglich, müssen Rheologieadditive (Antiabsetzadditive) eingesetzt werden.

Auf diese Weise kann verhindert werden, dass die Dispersion vor jeder Anwendung neu aufgerührt werden muss.

Gemäß einer weiteren bevorzugten Ausführungsform der vorliegenden Erfindung liegt die bei Raumtemperatur im Wesentlichen tackfreie Beschichtung als kationisch strahlenhärtendes Harz vor. Besonders gut geeignet sind epoxidmodifizierte Vinyl-Copolymere. Als Beispiel solcher epoxidmodifizierten Vinyl-Copolymere ist UCAR VERR-40 (The Dow Chemical Company) zu nennen.

Die in der tackfreien Beschichtung enthaltene strahlenvernetzbare Komponente kann bevorzugt durch kurzwellige Strahlung, wie ultraviolette Strahlung oder kurzwellige sichtbare Strahlung, oder durch Elektronenstrahlung vernetzt werden. Besonders bevorzugt können als Strahlenquelle Standard-UV-Strahler (dotiert oder undotiert) oder UV-Leuchtdioden eingesetzt werden.

Die das kationisch strahlenhärtende Harz umfassende tackfreie Beschichtung enthält bevorzugt einen für kationische Strahlenhärtung geeigneten Photoinitator. Mit dessen Hilfe kann die Vernetzung auf besonders einfache Weise gestartet werden. Optional kann das kationisch strahlenhärtende Harz auch mit weiteren Harzen kombiniert werden. Die das kationisch härtende Harz umfassende Beschichtung kann ferner auch nur rein thermisch vernetzt werden. In diesem Fall kann von der Verwendung eines Photoinitiators abgesehen werden.

Bevorzugt umfasst das Sicherheitselement neben der bei Raumtemperatur im Wesentlichen tackfreien Beschichtung wenigstens eine weitere Schicht, wobei es sich um eine mittels Strahlung zumindest vorvernetzte Schicht handelt. Diese Schicht wird bevorzugt zwischen dem Substrat und der bei Raumtemperatur im Wesentlichen tackfreien Beschichtung aufgebracht. Mittels Strahlung kann diese Schicht soweit vernetzt werden, dass ein mit der Gefahr des Haftungsverlusts durch Entnetzen verbundenes späteres Aufschmelzen ausgeschlossen wird, trotzdem aber noch eine gute Überdruckbarkeit gegeben ist. Zur Herstellung eines erfindungsgemäßen Sicherheitselements wird die zusätzliche, mittels Strahlung zumindest vorvernetzte Schicht mit der erfindungsgemäßen Beschichtung, insbesondere mit einer UV-härtbaren Dispersion, überschichtet. Diese weitere Schicht wird dann lediglich physikalisch getrocknet, um Tackfreiheit zu erzielen und gleichzeitig die Schmelzbarkeit zu erhalten.

Zur Erhöhung der Fälschungssicherheit umfasst das Sicherheitselement bevorzugt außerdem zusätzlich wenigstens ein visuell und/oder maschinell prüfbares Sicherheitsmerkmal.

Gemäß einer bevorzugten Ausgestaltung kann das visuell und/oder maschinell prüfbare Sicherheitsmerkmal einen optisch variablen Effekt, insbesondere ein Beugungsmuster, ein Hologramm, einen Farbkippeffekt oder andere Interferenzeffekte umfassen. Nach einer anderen bevorzugten Ausgestaltung ist das Sicherheitselement mit einem Druckbild, insbesondere mit Positiv- oder Negativmustern oder Positiv- oder Negativzeichen als Sicherheitsmerkmal versehen. Das Sicherheitselement kann als weiteres Sicherheitsmerkmal auch Fluoreszenzstoffe, Phosphoreszenzstoffe und/ oder magnetische Stoffe enthalten, die insbesondere im Substrat vorliegen können. Es liegt auf der Hand, dass auch Kombinationen solcher Sicherheitsmerkmale möglich sind.

Bevorzugt wird als Substrat des erfindungsgemäßen Sicherheitselements eine transparente Kunststofffolie verwendet. Solche Folien haben den Vorteil, dass die Bestrahlung mit UV-Licht durch die Folie hindurch vorgenommen werden kann. So ist beispielsweise eine PET-Folie ausgehend vom sichtbaren Bereich im UV-Bereich bis ca. 310 nm transparent. Zur Bestrahlung können daher handelsübliche UV-Strahler einsetzt werden. Alternativ kann das Substrat aber auch, gegebenenfalls zusätzlich, eine Papierschicht umfassen.

Besonders bevorzugt umfasst das Sicherheitselement neben dem Substrat und der bei Raumtemperatur im Wesentlichen tackfreien Beschichtung wenigstens eine weitere Schicht, wobei es sich um eine zumindest bereichsweise reflektierende Schicht handelt.

Ebenfalls bevorzugt sind Ausführungsformen, bei denen das Sicherheitselement neben dem Substrat und der bei Raumtemperatur im Wesentlichen tackfreien Beschichtung wenigstens eine weitere Schicht umfasst, wobei es sich um eine Schicht handelt, in die eine Beugungsstruktur in Form eines Reliefs eingeprägt ist. Die Beugungsstruktur ist vorzugsweise wenigstens bereichsweise mit einer reflektierenden Schicht versehen.

Die bei Raumtemperatur im Wesentlichen tackfreie Beschichtung kann auch als Prägelack eingesetzt werden. Übliche thermoplastische Prägelacke erfordern entweder bei der Prägung hohe Temperaturen und Drucke oder werden bei der Applikation des Hologramms auf ein Substrat trüb bzw. matt, da die geprägten Strukturen unter Applikationsbedingungen erweichen und verdrückt werden. Bei üblichen, in der Regel flüssigen UV-Lacksystemen wiederum ist nur eine durchgehende Härtung der Prägeschicht möglich, wodurch ein kantenscharfes Herausbrechen bei der Herstellung eines Patches nicht oder nur bedingt möglich ist.

Wird ein erfindungsgemäßes Sicherheitselement mit einer bei Raumtemperatur im Wesentlichen tackfreien Beschichtung auf einem Substrat, insbesondere einer Kunststofffolie, verwendet, die gegebenenfalls mit einer Trennschicht (z.B. Wachse) versehen ist, liegt zunächst ein niedrigschmelzender thermoplastischer Prägelack vor. In diese Lackschicht kann ein Motiv, insbesondere eine Beugungsstruktur in Form eines Reliefs geprägt werden. Währenddessen oder danach (bei blockfreier Einstellung und entsprechendem Glaspunkt der Dispersion auch nach Wickeln möglich) erfolgt die Härtung der Dispersion durch Maskenbelichtung. Das heißt, die später zu übertragenden Bereiche (Patches) werden belichtet, die Zwischenbereiche nicht. Die Zwischenbereiche bleiben daher weich und schmelzbar, wodurch später ein kantenscharfes Herausschmelzen möglich wird, während die belichteten Bereiche auch beim Transferprozess hart bleiben und ihre Prägestrukturen behalten. Die bei Raumtemperatur im Wesentlichen tackfreien Beschichtungen gemäß der vorliegenden Erfindung können also während des Prägeprozesses vernetzt werden und sind daher auch bei hohen Drucken und Temperaturen dimensionsstabil und brillant.

Gemäß einer bevorzugten Ausführungsform der vorliegenden Erfindung umfasst das Sicherheitselement daher neben dem Substrat eine bei Raumtemperatur im Wesentlichen tackfreie Beschichtung, wobei in die bei Raumtemperatur im Wesentlichen tackfreie Beschichtung eine Beugungsstruktur in Form eines Reliefs eingeprägt ist. Vorteilhafterweise liegt die bei Raumtemperatur im Wesentlichen tackfreie Beschichtung dabei in einer bereichsweise gehärteten Form vor. Die bei Raumtemperatur im Wesentlichen tackfreie Beschichtung ist bevorzugt nur in den gehärteten Bereichen mit der Beugungsstruktur versehen.

Vorteilhafterweise sind wenigstens die mit der Beugungsstruktur versehenen Bereiche der gehärteten Schicht wenigstens bereichsweise mit einer reflektierenden Schicht ausgestattet. Die reflektierende Schicht liegt dabei bevorzugt in Form von Positiv- oder Negativmustern vor.

Sicherheitselemente, die auf einer separaten Schicht, beispielsweise einer Kunststofffolie, in der umgekehrten Reihenfolge, wie sie später auf dem Sicherheitspapier zu liegen kommt, vorbereitet werden und anschließend mittels einer Klebstoff- oder Lackschicht in den gewünschten Umrissformen auf das Sicherheitspapier übertragen werden, werden als Transferelemente bezeichnet. Die separate Schicht kann dabei nach dem Übertrag von dem Schichtaufbau des Sicherheitselements abgezogen werden. Um das Ablösen der separaten Schicht nach dem Transfer des Sicherheitselements zu erleichtern, kann zwischen dieser Schicht und dem abzulösenden Teil des Sicherheitselements eine Trennschicht vorgesehen sein.

Gemäß einer weiteren bevorzugten Ausführungsform umfasst das Sicherheitselement daher neben dem Substrat und der bei Raumtemperatur im Wesentlichen tackfreien Beschichtung wenigstens eine weitere Schicht, wobei es sich um eine Trennschicht handelt. Besonders bevorzugt ist es, wenn die Trennschicht zwischen dem Substrat und der bei Raumtemperatur im Wesentlichen tackfreien Beschichtung angeordnet ist.

Die bei Raumtemperatur im Wesentlichen tackfreie Beschichtung des Sicherheitselements liegt gemäß einer weiteren bevorzugten Ausführungsform mit Druckfarbe bedruckt und mittels Strahlung vernetzt vor. Insbesondere Beschichtungen von Papier sollten Schmutz abweisend sein, eine gute Druckfarbenhaftung bieten und bei Beständigkeitstests nicht als Trennstelle zwischen Papier und Druckfarbe fungieren. Durch Anwendung einer definierten Temperatur, bei der die Vernetzungsreaktion der bei Raumtemperatur im Wesentlichen tackfreien Beschichtung erfolgt, kann der Vernetzungsgrad gesteuert werden und damit die Balance zwischen Druckfarbenhaftung und Schmutzabweisung eingestellt werden.

Das Bedrucken kann alternativ entweder nach der vollständigen Vernetzung der tackfreien Beschichtung erfolgen oder vor der Vernetzung. Erfolgt das Bedrucken vor der Vernetzung, so wird die bei Raumtemperatur im Wesentlichen tackfreie Beschichtung bedruckt, wobei es zu einer Art Anlösen der Beschichtung durch die Druckfarbe kommt. Die Druckfarbe verbindet sich mit der Beschichtung, wodurch die Haftung weiter verbessert wird. Um Probleme durch Wegschlagen bzw. ein zu starkes Aufsaugen der Beschichtung durch das Papier beim Auftragen zu vermeiden, können Rheologieadditive (speziell Verdicker) eingesetzt werden.

In einer ebenfalls vorteilhaften Variante wird die tackfreie Beschichtung vor dem Bedrucken mit Druckfarbe vorvernetzt. Eine vollständige Vernetzung erfolgt jedoch auch hier erst nach dem Bedrucken.

In bevorzugten Ausgestaltungen ist das Sicherheitselement in Form eines Sicherheitsbandes, eines Sicherheitsstreifens, eines Patches oder eines sonstigen flächigen Sicherheitselements ausgebildet.

Das Substrat des Sicherheitselements kann auch in Form von Fasern vorliegen, wobei die Fasern von der bei Raumtemperatur im Wesentlichen tackfreien Beschichtung umgeben sind.

Besondere Vorteile ergeben sich, wenn das Sicherheitselement über einem in einem Sicherheitspapier oder einem Wertgegenstand vorliegenden Fenster angeordnet ist. Dieses Fenster ist bevorzugt papiermacherisch hergestellt oder ausgestanzt.

Die vorliegende Erfindung umfasst auch ein Sicherheitspapier für die Herstellung von Sicherheits- oder Wertdokumenten, wie Banknoten, Schecks, Ausweiskarten, Urkunden oder dergleichen, das mit einem oben beschriebenen Sicherheitselement ausgestattet ist. Vorteilhafterweise weist das Sicherheitspapier neben dem erfindungsgemäßen Sicherheitselement wenigstens ein zusätzliches Trägersubstrat auf. Als Trägersubstrat wird Papier bevorzugt. Ebenso ist von der vorliegenden Erfindung ein Wertgegenstand, Markenartikel, Wertdokument oder dergleichen mit einem derartigen Sicherheitselement umfasst.

Bevorzugt kann das Sicherheitselement dabei auf dem Sicherheitspapier oder Wertdokument angebracht oder in dieses eingebettet sein. Alternativ ist das Sicherheitselement nach Art eines Fenstersicherheitsfadens in das Sicherheitspapier oder Wertdokument eingebettet und ist in Fensterbereichen des Sicherheitspapiers oder Wertdokuments an dessen Oberfläche sichtbar. Das Sicherheitselement kann auch einen Pendelsicherheitsfaden bilden, der abwechselnd an gegenüberliegenden Oberflächen des Sicherheitspapiers oder Wertdokuments erscheint.

Bei dem Verfahren zur Herstellung eines der oben beschriebenen Sicherheitselemente wird eine bei Raumtemperatur im Wesentlichen tackfreie Beschichtung auf ein Substrat zumindest teilweise aufgebracht. Die bei Raumtemperatur im Wesentlichen tackfreie Beschichtung wird danach bevorzugt zumindest physikalisch getrocknet.

Gemäß einer besonders bevorzugten Verfahrensvariante wird die bei Raumtemperatur im Wesentlichen tackfreie Beschichtung als wässrige Dispersion aufgetragen.

Gemäß einer weiteren bevorzugten Verfahrensvariante wird als bei Raumtemperatur im Wesentlichen tackfreie Beschichtung ein kationisch strahlenhärtendes Harz aufgetragen.

In einer bevorzugten Ausgestaltung des Verfahrens wird vor Aufbringung der bei Raumtemperatur im Wesentlichen tackfreien Beschichtung wenigstens eine weitere Schicht auf das Substrat wenigstens bereichsweise aufgebracht. Diese weitere Schicht kann eine mittels Strahlung vernetzbare Schicht sein, die mittels Strahlung zumindest vorvernetzt wird, bevor die tackfreie Beschichtung aufgetragen wird. Durch die Vorvernetzung kann ein mit der Gefahr des Haftungsverlusts zum Substrat verbundenes späteres Aufschmelzen minimiert werden.

Bei einer ebenfalls vorteilhaften Variante wird die bei Raumtemperatur im Wesentlichen tackfreie Beschichtung durch ultraviolette Strahlung oder durch Elektronenstrahlung vernetzt.

Die vorliegende Erfindung umfasst auch ein Verfahren zur Herstellung eines oben beschriebenen Sicherheitspapiers oder Wertgegenstands, wobei das Sicherheitspapier oder der Wertgegenstand mit einem oben beschriebenen Sicherheitselement ausgestattet wird.

Gemäß einer bevorzugten Verfahrensvariante wird dabei das Sicherheitselement bei erhöhtem Druck und erhöhter Temperatur auf ein Trägersubstrat aufgebracht und anschließend die bei Raumtemperatur im Wesentlichen tackfreie Beschichtung mittels Strahlung zumindest vorvernetzt. Liegt das Sicherheitselement als Transferelement vor, kann die bei Raumtemperatur im Wesentlichen tackfreie Beschichtung nach dem Entfernen des Substrats und, falls vorhanden, der Trennschicht vollständig vernetzt werden. Gemäß einer weiteren bevorzugten Verfahrensvariante wird die bei Raumtemperatur im Wesentlichen tackfreie Beschichtung unmittelbar vor Aufbringung des Sicherheitselements auf das Sicherheitspapier oder den Wertgegenstand aus Richtung der Beschichtung mit kurzwelliger Strahlung, insbesondere kurzwelliger sichtbarer Strahlung oder UV-Strahlung, bestrahlt und anschließend bei erhöhtem Druck und erhöhter Temperatur auf ein Trägersubstrat aufgebracht. Die Belichtung von der Beschichtungsseite her ist vorteilhaft, da eine Belastung des Trägersubstrats durch UV-Strahlung sowie eine UV-Belastung des Materials des Sicherheitselements vermieden oder zumindest signifikant verringert wird.

Die vorliegende Erfindung umfasst daneben die Verwendung eines der oben beschriebenen Sicherheitselemente zur Herstellung von Folienverbund-Banknoten sowie die Verwendung als Verpackungsmaterial. Beispielsweise sind sterilisierbare Folienverpackungen mit einem erfindungsgemäßen Sicherheitselement siegel- und vernetzbar. Bei erfolgreicher UV-Sterilisation wird gleichzeitig die Siegelnaht vernetzt und fest.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen
- Fig.1: im Querschnitt eine schematische Darstellung eines erfindungsgemäßen Sicherheitselements mit einer bei Raumtemperatur im Wesentlichen tackfreien Beschichtung;
- Fig. 2: im Querschnitt eine schematische Darstellung eines Sicherheitspapiers, das mit dem Sicherheitselement von Fig. 1 ausgestattet ist;
- Fig. 3: eine schematische Darstellung eines Sicherheitselements nach einem anderen Ausführungsbeispiel der Erfindung im Querschnitt;
- Fig. 4: im Querschnitt eine schematische Darstellung eines Sicherheitspapiers, das mit dem Sicherheitselement von Fig. 3 ausgestattet ist;
- Fig. 5: eine schematische Darstellung eines Sicherheitspapiers nach einem anderen Ausführungsbeispiel der Erfindung im Querschnitt;
- Fig. 6: im Querschnitt eine schematische Darstellung des Sicherheitspapiers von Fig. 5 nach dem Ablösen des Substrats des als Transferelement ausgebildeten Sicherheitselements;
- Fig. 7: eine schematische Darstellung eines Sicherheitselements bzw. eines Sicherheitspapiers nach einem anderen Ausführungsbeispiel der Erfindung im Querschnitt;
- Fig. 8: eine schematische Darstellung eines Sicherheitselements bzw. eines Sicherheitspapiers nach einem anderen Ausführungsbeispiel der Erfindung im Querschnitt;
- Fig. 9: eine schematische Darstellung eines als Transferelement ausgebildeten Sicherheitselements nach einem anderen Ausführungsbeispiel der Erfindung im Querschnitt;
- Fig. 10: eine schematische Darstellung des Sicherheitselements von Fig. 9 nach Belichtung mit UV-Strahlung im Querschnitt;
- Fig.11: eine schematische Darstellung eines Sicherheitspapiers nach einem anderen Ausführungsbeispiel der Erfindung im Querschnitt;
- Fig. 12: eine schematische Darstellung eines Wertdokuments in Aufsicht;
- Fig. 13: einen Querschnitt durch das Wertdokument von Fig. 12.

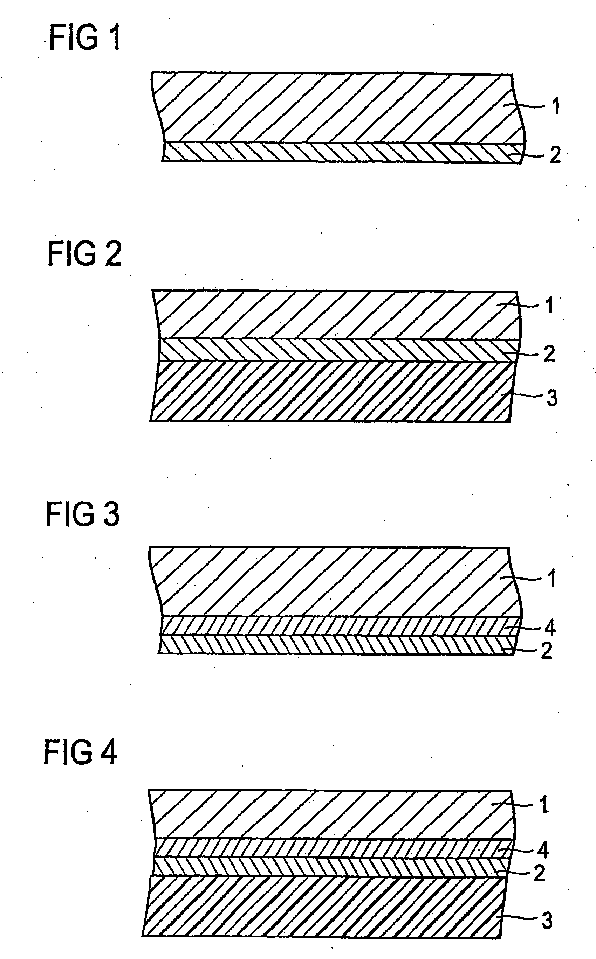

Fig. 1 zeigt eine schematische Darstellung eines erfindungsgemäßen Sicherheitselements mit einem Substrat 1 und einer bei Raumtemperatur im Wesentlichen tackfreien Beschichtung 2. Zur Herstellung des Sicherheitselements wird beispielsweise eine mittels UV-Strahlung härtbare Dispersion (UV-Dispersion) auf das Substrat 1, zum Beispiel auf eine Kunststofffolie, insbesondere eine PET- oder OPP-Folie, aufgetragen. Die UV-Dispersion wird getrocknet (z.B. bei 80°C), wodurch eine bei Raumtemperatur im Wesentlichen tackfreie Beschichtung 2 entsteht.

Das Sicherheitselement sowie sämtliche nachfolgend beschriebenen Sicherheitselemente können mit weiteren, in den jeweiligen Figuren nicht dargestellten Sicherheitsmerkmalen, beispielsweise einem Hologramm oder einem Druckdesign, ausgestattet sein.

Fig. 2 zeigt im Querschnitt eine schematische Darstellung eines Sicherheitspapiers, das mit dem Sicherheitselement von Fig. 1 ausgestattet ist. Zur Herstellung des Sicherheitspapiers wird das Sicherheitselement von Fig. 1 durch einen Heißsiegelvorgang bei erhöhtem Druck und erhöhter Temperatur (z.B. bei 140°C) auf ein Trägersubstrat 3, z.B. Papier, übertragen. Die bei Raumtemperatur im Wesentlichen tackfreie Beschichtung übernimmt in diesem Fall also die Funktion eines Heißsiegellacks.

Anschließend wird die Beschichtung 2 von Fig. 1 durch Einwirkung von UV-Strahlung (z.B. Hg- und Fe-Strahler) vernetzt, sodass schließlich ein Sicherheitspapier mit einer strahlenvernetzten, unschmelzbaren Beschichtung 2 und einem abdeckenden Substrat 1, z.B. einer Kunststofffolie, erhalten wird.

Fig. 3 zeigt im Querschnitt eine schematische Darstellung eines Sicherheitselements nach einem anderen Ausführungsbeispiel der Erfindung. Zur Herstellung des Sicherheitselements wird eine UV-Dispersion auf ein Substrat 1, zum Beispiel auf eine Kunststofffolie, aufgetragen. Bei der Kunststofffolie handelt es sich beispielsweise um eine PET- oder OPP-Folie. Die UV-Dispersion wird getrocknet (z.B. bei 80°C) und durch Einwirkung von UV-Strahlung vernetzt, wodurch eine unschmelzbare Beschichtung 4 entsteht. Über dieser Beschichtung 4 wird eine weitere Beschichtung mit einer UV-Dispersion aufgetragen und getrocknet (z.B. bei 80°C), wodurch eine bei Raumtemperatur im Wesentlichen tackfreie Beschichtung 2 entsteht. Die Ausbildung einer solchen zweilagigen Beschichtung hat den Vorteil, dass eine gute Haftung zum Substrat 1 beim anschließenden Heißsiegelvorgang gewährleistet ist.

Fig. 4 zeigt im Querschnitt eine schematische Darstellung eines Sicherheitspapiers, das mit dem Sicherheitselement von Fig. 3 ausgestattet ist. Zur Herstellung des Sicherheitspapiers wird das Sicherheitselement von Fig. 3 durch einen Heißsiegelvorgang bei erhöhtem Druck und erhöhter Temperatur (z.B. bei 140°C) auf ein Trägersubstrat 3 aus Papier aufgetragen. Anschließend wird die Beschichtung 2 von Fig. 3 durch Einwirkung von UV-Strahlung (z.B. Hg- und Fe-Strahler) vernetzt, sodass schließlich ein Sicherheitspapier mit einer zweilagigen, strahlenvernetzten, unschmelzbaren Beschichtung 2, 4 und einem abdeckenden Substrat 1, hier einer Kunststofffolie, erhalten wird.

Die beschriebenen Sicherheitselemente zeichnen sich durch eine hervorragende Haftung der Beschichtungen 2, 4 an dem Substrat 1 aus. Diese Haftung geht selbst bei den erhöhten Temperaturen des Heißsiegelvorgangs nicht verloren. Sollten dennoch Haftungsprobleme bei einer der verwendeten Kunststofffolien auftreten, so kann z.B. eine druckvorbehandelte Folie (z.B. Hostaphan RNK2600, Mitsubishi Polyester Film) eingesetzt werden.

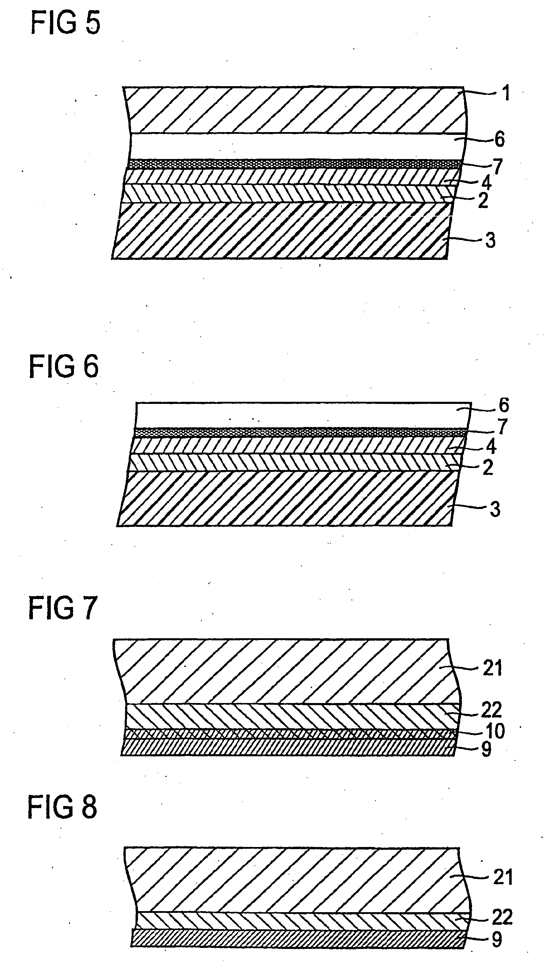

Fig. 5 zeigt im Querschnitt eine schematische Darstellung eines Sicherheitspapiers nach einem anderen Ausführungsbeispiel der Erfindung. Zur Herstellung des hier als Transferelement ausgebildeten Sicherheitselements, mit dem das in Fig. 5 gezeigte Sicherheitspapier ausgerüstet wird, wird auf ein Substrat 1, zum Beispiel auf eine PET-Trägerfolie, ein Prägelack 6 aufgetragen. Optional kann zwischen der PET-Trägerfolie und der Prägelackschicht 6 eine Trennschicht, z.B. aus Wachs, aufgebracht werden. Der Prägelack 6 wird mit einer reflektierenden Schicht 7, beispielsweise einer Metallschicht- oder einer hochbrechenden Schicht, versehen. Als reflektierende Materialien kommen alle Metalle und viele Metalllegierungen in Betracht. Beispiele für geeignete hochbrechende Materialien sind CaS, CrO₂, ZnS, TiO₂ oder SiOₓ. Die reflektierende Schicht 7 kann auch in Form von Mustern oder Zeichen, insbesondere Positiv- oder Negativmustern, aufgebracht werden. Die Prägung des Prägelacks 6, beispielsweise eine Beugungsstruktur in Form eines Reliefs, die hier aus Gründen der Übersichtlichkeit nicht gezeigt ist und auf der dem Substrat 1 abgewandten Seites des Prägelacks 6 vorliegt, kann vor oder nach dem Aufbringen der reflektierenden Schicht 7 erfolgen.

Über der reflektierenden Schicht 7 wird eine UV-Dispersion aufgetragen und thermisch getrocknet (z.B. bei 80°C), wodurch eine bei Raumtemperatur im Wesentlichen tackfreie Beschichtung 4 entsteht. Die bei Raumtemperatur im Wesentlichen tackfreie Beschichtung kann in diesem Fall also als Schutzlack für die Metallisierung dienen. Bei Bedarf kann ferner zwischen der reflektierenden Schicht 7 und der Beschichtung 4 eine Primer-/Haftvermittler-Schicht aufgetragen werden.

Durch eine UV-Bestrahlung aus Richtung der Beschichtung, d.h. von der im Wesentlichen für UV-Strahlung durchlässigen Seite des Sicherheitspapiers her, wird die UV-Dispersion vernetzt, wodurch eine unschmelzbare Beschichtung 4 entsteht. Auf diese vernetzte UV-Dispersionsschicht wird anschließend eine weitere Beschichtung mit einer UV-härtbaren Dispersion aufgebracht und thermisch getrocknet (z.B. bei 80°C). Durch die Trocknung der UV-Dispersion entsteht eine bei Raumtemperatur im Wesentlichen tackfreie Beschichtung 2.

Dieses Sicherheitselement wird zur Herstellung des dargestellten Sicherheitspapiers anschließend durch einen Heißsiegelvorgang bei erhöhtem Druck und erhöhter Temperatur (z.B. bei 140°C) auf ein Trägersubstrat 3 aus Papier aufgetragen. Anschließend kann die Beschichtung 2 durch Einwirkung von UV-Strahlung (z.B. Hg- und Fe-Strahler) durch die PET-Trägerfolie hindurch vorvernetzt werden, wobei die Vorvernetzung aber nicht zwingend erforderlich ist.

Anschließend wird die PET-Trägerfolie und, falls vorhanden, die Trennschicht abgezogen. Die PET-Trägerfolie kann aber auch auf der Prägelackschicht 6 als Schutzschicht verbleiben. In diesem Fall ist keine Trennschicht vorgesehen. Schließlich wird die vorvernetzte Beschichtung 2 durch Einwirkung von UV-Strahlung (z.B. Hg-undotierter-Strahler) durch die reflektierende Schicht 7 hindurch vernetzt, so dass schließlich das in Fig. 6 im Querschnitt schematisch gezeigte Sicherheitspapier mit einem Trägersubstrat 3 aus Papier, einer zweilagigen, strahlenvernetzten, unschmelzbaren Beschichtung 2, 4, einer reflektierenden Schicht 7 und einer Prägelackschicht 6 erhalten wird.

Die Vernetzung mithilfe von UV-Strahlung durch eine Metallschicht hindurch stellt kein technisches Problem dar, da Metallisierungen (speziell Aluminium) eine relativ hohe Transparenz, insbesondere im UV-Bereich, aufweisen. Eine Metallisierung mit Aluminium (Optische Dichte = 2,0) ist beispielsweise für Strahlung im langwelligen UV-Bereich zu 5 % bis 10 % transparent. Zudem bewirkt die Prägelackschicht 6 im Zusammenhang mit der Metallschicht einen sehr guten Sauerstoffausschluss, was zu einer verbesserten UV-Vernetzung der Beschichtungen 2, 4 führt.

Fig. 7 zeigt im Querschnitt eine schematische Darstellung eines Sicherheitselements bzw. eines Sicherheitspapiers nach einem anderen Ausführungsbeispiel der Erfindung. Zur Herstellung des Sicherheitselements bzw. -papiers wird eine UV-Dispersion auf ein Substrat 21 aus Papier vollflächig aufgetragen. Die UV-Dispersion kann auch beidseitig.auf das Substrat 21 aufgebracht werden, so dass das Substrat 21 von der Beschichtung 22 vollständig umschlossen ist, was hier aus Gründen der Übersichtlichkeit nicht dargestellt ist. Bei Bedarf kann die UV-Dispersion außerdem Rheologieadditive enthalten. Die UV-Dispersion wird getrocknet (z.B. bei 80°C), wodurch eine bei Raumtemperatur im Wesentlichen tackfreie Beschichtung 22 entsteht. Anschließend wird die im Wesentlichen tackfreie Beschichtung 22 mit einer Druckfarbe 9 bedruckt.

Dadurch wird die UV-härtbare Beschichtung 22 im oberen, dem Papier-Substrat abgewandten Bereich 10 "angelöst", d.h. die Druckfarbe verbindet sich mit der Beschichtung 22. Dann wird die Beschichtung 22 durch Einwirkung von UV-Strahlung (z.B. Hg- und Fe-Strahler) vernetzt, so dass ein erfindungsgemäßes Sicherheitselement- bzw. papier mit einer Papierschicht, einer nunmehr strahrenvernetzten, unschmelzbaren Beschichtung 22, die mit der Druckfarbe 9 bedruckt ist, erhalten wird.

Alternativ wird zur Herstellung des in Fig. 8 im Querschnitt schematisch dargestellten Sicherheitselements bzw. -papiers nach einem anderen Ausführungsbeispiel der Erfindung eine UV-Dispersion auf ein Substrat 21 aus Papier vollflächig aufgetragen. Auch hier kann die UV-Dispersion beidseitig auf das Substrat 21 aufgebracht werden. Die UV-Dispersion wird getrocknet (z.B. bei 80°C), wodurch eine bei Raumtemperatur im Wesentlichen tackfreie Beschichtung 22 entsteht. Anschließend wird die Beschichtung 22 durch Einwirkung von UV-Strahlung (z.B. Hg- und Fe-Strahler) vernetzt, so dass ein erfindungsgemäßes Sicherheitselement bzw. -papier mit einer strahlenvernetzten, unschmelzbaren Beschichtung 22 erhalten wird. Die strahlenvernetzte Beschichtung 22 kann anschließend mit Druckfarbe 9 bedruckt werden, wobei die Druckfarbenhaftung und die Schmutz abweisenden Eigenschaften über den Vernetzungsgrad der Beschichtung 22 angepasst werden können.

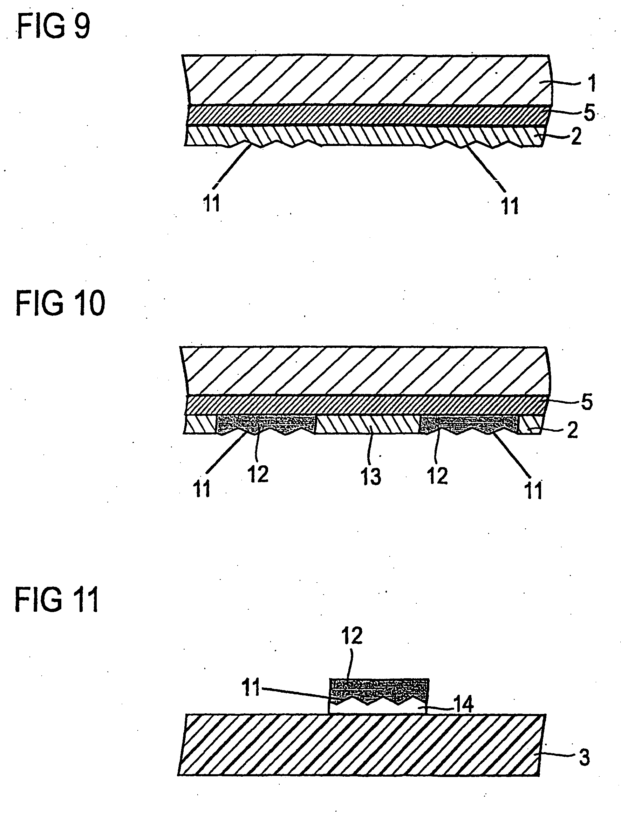

Fig. 9 zeigt im Querschnitt eine schematische Darstellung eines als Transferelement ausgebildeten Sicherheitselements nach einem anderen Ausführungsbeispiel der Erfindung. Zur Herstellung des Sicherheitselements wird eine Beschichtung mit einer UV-Dispersion auf ein Substrat 1, zum Beispiel auf eine PET-Trägerfolie, aufgetragen. Die UV-Dispersion wird thermisch getrocknet (z.B. bei 80°C), wodurch eine bei Raumtemperatur im Wesentlichen tackfreie Beschichtung 2 entsteht. Optional kann zwischen der PET-Trägerfolie und der Beschichtung 2 eine Trennschicht 5 aufgebracht werden.

In die Beschichtung 2 kann eine Beugungsstruktur 11 eingeprägt werden. Die UV-härtbare Dispersion wird in diesem Fall also als Prägelack eingesetzt. Während dieses Vorgangs oder anschließend erfolgt die Härtung der Beschichtung 2 durch Einwirkung von UV-Strahlung. Die Belichtung wird durch eine Maske hindurch vorgenommen. Wie aus der Fig. 10 zu ersehen ist, wird die UV-Belichtung nur an den Stellen 12 vorgenommen, an denen zuvor ein Motiv in Form einer Beugungsstruktur 11 eingeprägt wurde. Es werden auf diese Weise die in einem nachfolgenden Schritt zu übertragenden Patches belichtet, die dazwischen liegenden Bereiche aber nicht. Die Zwischenbereiche 13 bleiben daher weich und schmelzbar, wodurch ein kantenscharfes Herausschmelzen beim Übertragen des Sicherheitselements auf ein Trägersubstrat möglich wird. Die belichteten Bereiche 12 hingegen bleiben auch beim Transferprozess hart und ihre Prägestrukturen bleiben erhalten. Optional kann die Beschichtung 2 einschließlich der Beugungsstrukturen 11 oder auch nur die mit einer Beugungsstruktur versehenen Bereiche mit einer Metallschicht oder einer hochbrechenden Schicht versehen werden, die hier aus Gründen der Übersichtlichkeit nicht dargestellt ist. Die Metallschicht bzw. hochbrechende Schicht kann ferner in Form von Mustern oder Zeichen, insbesondere Positiv- oder Negativmustern, aufgebracht werden.

Fig. 11 zeigt im Querschnitt eine schematische Darstellung eines Sicherheitspapiers, das mit dem Sicherheitselement von Fig. 10 ausgestattet ist. Nach der in Fig. 10 dargestellten, durch UV-Belichtung bewirkten Vernetzung der Beschichtung 2 an den Stellen 12 der Beschichtung 2, an denen zuvor ein Motiv in Form einer Beugungsstruktur 11 eingeprägt wurde, sowie gegebenenfalls der Aufbringung einer Metallschicht bzw. einer hochbrechenden Schicht, wird der Patch mittels eines Heißsiegelklebstoffs 14 auf ein Trägersubstrat 3 appliziert. Durch die auf die Stellen 12 begrenzte UV-Belichtung bleiben die Zwischenbereiche 13 weich und schmelzbar, wodurch beim Transfer des Sicherheitselements durch einen heißen Stempel ein kantenscharfes Herausschmelzen möglich wird. Die belichteten Bereiche 12 hingegen bleiben auch beim Transferprozess hart und ihre Prägestrukturen bleiben erhalten.

Es ist aber auch möglich, anstelle des Heißsiegelklebstoffs eine Beschichtung aus UV-vernetzbarer Dispersion zu verwenden. Dabei ist allerdings zu beachten, dass die UV-vernetzbare Dispersion erst nach Entfernen der nicht gehärteten Zwischenbereiche 13 transferiert und mittels UV-Strahlung vernetzt wird.

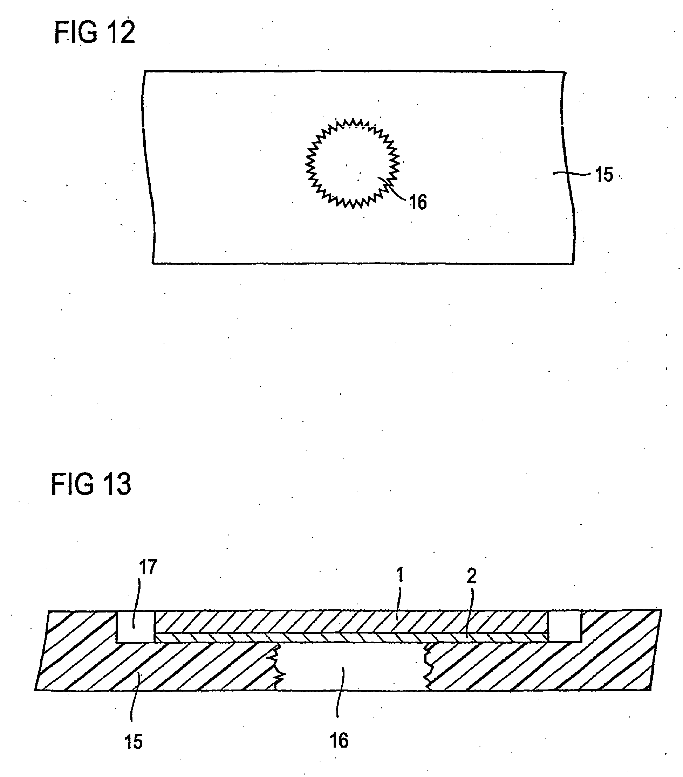

Fig. 12 zeigt in Aufsicht ein Wertdokument 15, beispielsweise eine Banknote, das mit einer durchgehenden Öffnung 16 ausgestattet ist. Die Öffnung 16 ist bevorzugt papiermacherisch hergestellt oder ausgestanzt. Die maschinelle Herstellung solcher Fensteröffnungen 16 ist in der DE 101 63 381 A1 beschrieben.

Fig. 13 zeigt einen Querschnitt des in Fig. 12 dargestellten Wertdokuments 15 mit dem Unterschied, dass die Öffnung 16 durch ein erfindungsgemäßes Sicherheitselement verschlossen ist. Das Sicherheitselement weist ein Substrat 1 und eine bei Raumtemperatur im Wesentlichen tackfreie Beschichtung 2 auf.

Das Sicherheitselement ist vorzugsweise in einer Vertiefung 17 angeordnet, die die Öffnung 16 umgibt. Die Vertiefung 17 kann durch nachträgliches Kalandrieren der Papierbahn erzeugt werden, d. h. durch Komprimierung der Papierfasern. Alternativ kann die Vertiefung 17 auch durch eine tatsächliche Verringerung der Papierdicke in diesem Bereich erzeugt werden. Dies geschieht am einfachsten direkt während der Herstellung der Papierbahn, indem die Blattbildung in diesem Bereich durch entsprechende Ausbildung des Siebs dünner ausgeführt wird.

In einem weiteren, nicht dargestellten Ausführungsbeispiel besteht das Sicherheitselement aus einem Substrat und einer bei Raumtemperatur im Wesentlichen tackfreien Beschichtung. Zur Herstellung des Sicherheitselements wird beispielsweise ein kationisch strahlenhärtendes Harz, insbesondere ein epoxidmodifiziertes Vinyl-Copolymer (z. B. UCAR VERR-40, The Dow Chemical Company), das mit einem für kationische Strahlenhärtung geeigneten Photoinitiator versehen ist, auf das Substrat, zum Beispiel auf eine Kunststofffolie, insbesondere eine PET- oder OPP-Folie, aufgetragen. Das kationisch strahlenhärtende Harz wird getrocknet (z.B. bei 80°C), wodurch eine bei Raumtemperatur im Wesentlichen tackfreie Beschichtung entsteht.

Zur Herstellung eines mit dem vorstehend beschriebenen Sicherheitselement ausgestatteten Sicherheitspapiers wird das Sicherheitselement durch einen Heißsiegelvorgang bei erhöhtem Druck und erhöhter Temperatur (z.B. bei 140°C) auf ein Trägersubstrat, z.B. Papier, übertragen. Dabei wird die thermische Vernetzung bereits gestartet. Anschließend wird die kationisch strahlenhärtbare Beschichtung durch Einwirkung von UV-Strahlung (z.B. Hg- und Fe-Strahler) vernetzt, sodass schließlich ein Sicherheitspapier mit einer strahlenvernetzten, unschmelzbaren Beschichtung und einem abdeckenden Substrat, z.B. einer Kunststofffolie, erhalten wird.

Alternativ kann die Beschichtung auch nur rein thermisch vernetzt werden. Dazu wird das Sicherheitselement nur durch einen Heißsiegelvorgang bei erhöhtem Druck und erhöhter Temperatur (z.B. bei 140°C bis 160°C) auf ein Trägersubstrat, z.B. Papier, übertragen. Die thermische Vernetzung erfolgt dabei im Rahmen des Heißsiegelvorgangs. Es liegt auf der Hand, dass bei dieser Verfahrensvariante von der Verwendung eines Photoinitiators abgesehen werden kann.

Die kationische Strahlenhärtung ist im Gegensatz zur radikalischen Strahlenhärtung ein langsamerer Prozess, der auch nach Bestrahlungsende noch weiterläuft. Während Radikale in kurzer Zeit abgefangen werden, wird bei der kationischen Strahlenhärtung eine Säure freigesetzt, die in der Beschichtung die Vernetzungsreaktion katalysiert. Daher kann die kationisch strahlenhärtbare Beschichtung in einer weiteren Variante des vorstehenden Ausführungsbeispiels unmittelbar vor der Applikation des Sicherheitselements von der Beschichtungsseite her mit kurzwelliger Strahlung (UV- oder kurzwellige blaue Strahlung) belichtet werden. Als Strahlenquelle können entweder übliche UV-Strahler (dotiert oder undotiert) oder bevorzugt UV-Leuchtdioden eingesetzt werden. UV-Leuchtdioden weisen neben positiven sicherheitstechnischen Aspekten auch technische Vorteile auf, da ein geringerer Wärmeeintrag sowie ein geringerer Energieverbrauch anfällt. Die Belichtung von der Beschichtungsseite her ist vorteilhaft, da keine Belastung des Trägersubstrats, z. B. Papier, durch UV-Strahlung sowie eine geringere UV-Belastung des Materials des Sicherheitselements stattfindet. Durch die Belichtung wird die Vernetzungsreaktion gestartet. Zum Zeitpunkt der Applikation auf das Trägersubstrat ist sie aufgrund der kurzen Zeitspanne noch nicht so weit fortgeschritten, dass das Aufschmelzen der Beschichtung erschwert würde. Da die Reaktion aber ohne weitere Maßnahmen von alleine weiterläuft, zeigt das mit dem Sicherheitselement versehene Sicherheitspapier die geforderten Beständigkeiten.

## Patentansprüche

1. Sicherheitselement für ein Sicherheitspapier, einen Wertgegenstand oder dergleichen mit einem Substrat (1), wobei das Substrat (1, 21) zumindest teilweise mit einer niedrigschmelzenden, bei Raumtemperatur im Wesentlichen tackfreien Beschichtung (2, 22) ausgestattet ist, **dadurch gekennzeichnet, dass** die Beschichtung (2, 22) wenigstens eine strahlenvernetzbare Komponente enthält und nach Bestrahlung hochschmelzend bis unschmelzbar ist.

2. Sicherheitselement nach Anspruch 1, **dadurch gekennzeichnet, dass** die bei Raumtemperatur im Wesentlichen tackfreie Beschichtung (2, 22) zumindest physikalisch getrocknet vorliegt.

3. Sicherheitselement nach Anspruch 1 oder 2, **dadurch gekennzeichnet, dass** es sich um ein flächiges Substrat (1, 21) mit zwei gegenüberliegenden Hauptflächen handelt, wobei zumindest eine Hauptfläche des Substrats (1, 21) zumindest teilweise mit der bei Raumtemperatur im Wesentlichen tackfreien Beschichtung (2, 22) ausgestattet ist.

4. Sicherheitselement nach wenigstens einem der Ansprüche 1 bis 3, **dadurch gekennzeichnet, dass** das Substrat (1, 21) mehrlagig ausgestaltet ist.

5. Sicherheitselement nach wenigstens einem der Ansprüche 1 bis 4, **dadurch gekennzeichnet, dass** das Substrat (1, 21) flexibel ausgestaltet ist.

6. Sicherheitselement nach wenigstens einem der Ansprüche 1 bis 5, **dadurch gekennzeichnet, dass** die Beschichtung (2, 22) als Lösung, Emulsion oder Dispersion aufgetragen wird.

7. Sicherheitselement nach Anspruch 6, **dadurch gekennzeichnet, dass** es sich bei der Dispersion um eine wässrige Dispersion handelt.

8. Sicherheitselement nach Anspruch 6 oder 7, **dadurch gekennzeichnet, dass** die Dispersion ausgewählt ist aus der Gruppe, bestehend aus aliphatischen Polyurethandispersionen, aromatischen Polyurethandispersionen, Acrylaten, anionischen acrylatmodifizierten Polyurethandispersionen, Polyurethan-Polyetheracrylaten und deren Gemischen.

9. Sicherheitselement nach wenigstens einem der Ansprüche 6 bis 8, **dadurch gekennzeichnet, dass** der Festkörperanteil der Dispersion zwischen 30 Gew.-% und 60 Gew.-%, vorzugsweise zwischen 35 Gew.-% und 50 Gew.-% liegt.

10. Sicherheitselement nach wenigstens einem der Ansprüche 1 bis 6, **dadurch gekennzeichnet, dass** die bei Raumtemperatur im Wesentlichen tackfreie Beschichtung ein kationisch strahlenhärtendes Harz umfasst.

11. Sicherheitselement nach wenigstens einem der Ansprüche 1 bis 10, **dadurch gekennzeichnet, dass** die in der bei Raumtemperatur im Wesentlichen tackfreien Beschichtung (2, 22) enthaltene strahlenvernetzbare Komponente durch ultraviolette Strahlung oder Elektronenstrahlung vernetzbar ist.

12. Sicherheitselement nach wenigstens einem der Ansprüche 1 bis 11, **dadurch gekennzeichnet, dass** die bei Raumtemperatur im Wesentlichen tackfreie Beschichtung (2, 22) einen Photoinitiator enthält.

13. Sicherheitselement nach Anspruch 12, **dadurch gekennzeichnet, dass** es sich bei dem Photoinitiator um einen wasserlöslichen Photoinitiator, einen in Wasser dispergierbaren Photoinitiator oder um einen mittels wasserkompatiblen Lösungsmitteln in Wasser löslichen Photoinitiator handelt.

14. Sicherheitselement nach wenigstens einem der Ansprüche 1 bis 13, **dadurch gekennzeichnet, dass** das Sicherheitselement neben der bei Raumtemperatur im Wesentlichen tackfreien Beschichtung (2) wenigstens eine weitere Schicht (4) umfasst, wobei es sich um eine mittels Strahlung zumindest vorvernetzte Schicht handelt.

15. Sicherheitselement nach wenigstens einem der Ansprüche 1 bis 14, **dadurch gekennzeichnet, dass** das Sicherheitselement zusätzlich wenigstens ein visuell und/oder maschinell prüfbares Sicherheitsmerkmal umfasst.

16. Sicherheitselement nach wenigstens einem der Ansprüche 1 bis 15, **dadurch gekennzeichnet, dass** das visuell und/ oder maschinell prüfbare Sicherheitsmerkmal einen optisch variablen Effekt, insbesondere ein Beugungsmuster, ein Hologramm, einen Farbkippeffekt oder andere Interferenzeffekte umfasst.

17. Sicherheitselement nach wenigstens einem der Ansprüche 1 bis 16, **dadurch gekennzeichnet, dass** das visuell und/ oder maschinell prüfbare Sicherheitsmerkmal ein Druckbild, insbesondere mit Positiv- oder Negativmustern oder -zeichen umfasst.

18. Sicherheitselement nach wenigstens einem der Ansprüche 1 bis 17, **dadurch gekennzeichnet, dass** das visuell und/ oder maschinell prüfbare Sicherheitsmerkmal Fluoreszenzstoffe, Phosphoreszenzstoffe oder magnetische Stoffe umfasst.

19. Sicherheitselement nach wenigstens einem der Ansprüche 1 bis 18, **dadurch gekennzeichnet, dass** das Substrat (1, 21) eine transparente Kunststofffolie umfasst.

20. Sicherheitselement nach wenigstens einem der Ansprüche 1 bis 19, **dadurch gekennzeichnet, dass** das Substrat (1, 21) eine Papierschicht umfasst.

21. Sicherheitselement nach wenigstens einem der Ansprüche 1 bis 20, **dadurch gekennzeichnet, dass** das Sicherheitselement eine Dicke von 1 µm bis 100 µm, bevorzugt eine Dicke von 2 µm bis 50 µm aufweist.

22. Sicherheitselement nach wenigstens einem der Ansprüche 1 bis 21, **dadurch gekennzeichnet, dass** das Sicherheitselement neben dem Substrat (1) und der bei Raumtemperatur im Wesentlichen tackfreien Beschichtung (2) wenigstens eine weitere Schicht umfasst, wobei es sich um eine zumindest bereichsweise reflektierende Schicht handelt.

23. Sicherheitselement nach wenigstens einem der Ansprüche 1 bis 22, **dadurch gekennzeichnet, dass** das Sicherheitselement neben dem Substrat (1) und der bei Raumtemperatur im Wesentlichewtackfreien Beschichtung (2) wenigstens eine weitere Schicht umfasst, wobei es sich um eine Schicht (6) handelt, in die eine Beugungsstruktur in Form eines Reliefs eingeprägt ist.

24. Sicherheitselement nach wenigstens einem der Ansprüche 1 bis 23, **dadurch gekennzeichnet, dass** in die bei Raumtemperatur im Wesentlichen tackfreie Beschichtung (2) eine Beugungsstruktur in Form eines Reliefs (11) eingeprägt ist.

25. Sicherheitselement nach wenigstens einem der Ansprüche 1 bis 24, **dadurch gekennzeichnet, dass** die bei Raumtemperatur im Wesentlichen tackfreie Beschichtung (2) in einer bereichsweise gehärteten Form (12) vorliegt und mit einer Beugungsstruktur in Form eines Reliefs (11) versehen ist.

26. Sicherheitselement nach wenigstens einem der Ansprüche 23 bis 25, **dadurch gekennzeichnet, dass** wenigstens die mit einer Beugungsstruktur versehenen Bereiche wenigstens bereichsweise mit einer reflektierenden Schicht (7) versehen sind.

27. Sicherheitselement nach wenigstens einem der Ansprüche 1 bis 26, **dadurch gekennzeichnet, dass** das Sicherheitselement neben dem Substrat (1) und der bei Raumtemperatur im Wesentlichen tackfreien Beschichtung (2) wenigstens eine weitere Schicht umfasst, wobei es sich um eine Trennschicht (5) handelt.

28. Sicherheitselement nach Anspruch 27, **dadurch gekennzeichnet, dass** die Trennschicht (5) zwischen dem Substrat (1) und der bei Raumtemperatur im Wesentlichen tackfreien Beschichtung (2) angeordnet ist.

29. Sicherheitselement nach wenigstens einem der Ansprüche 1 bis 28, **dadurch gekennzeichnet, dass** die bei Raumtemperatur im Wesentlichen tackfreie Beschichtung (22) mit Druckfarbe (9) bedruckt und mittels Strahlung vernetzt vorliegt.

30. Sicherheitselement nach wenigstens einem der Ansprüche 1 bis 29, **dadurch gekennzeichnet, dass** das Sicherheitselement in Form eines Sicherheitsbandes, eines Sicherheitsstreifens, eines Patches oder eines sonstigen flächigen Sicherheitselements ausgebildet ist.

31. Sicherheitselement nach wenigstens einem der Ansprüche 1 bis 29, **dadurch gekennzeichnet, dass** das Substrat in Form von Fasern vorliegt, wobei die Fasern von der bei Raumtemperatur im Wesentlichen tackfreien Beschichtung umgeben sind.

32. Sicherheitspapier für die Herstellung von Sicherheits- oder Wertdokumenten, wie Banknoten, Scheck, Ausweiskarten, Urkunden oder dergleichen, das ausgestattet ist mit einem Sicherheitselement nach wenigstens einem der Ansprüche 1 bis 31.

33. Sicherheitspapier nach Anspruch 32, **dadurch gekennzeichnet dass** das Sicherheitspapier neben dem Sicherheitselement ein zusätzliches Trägersubstrat (3) aufweist.

34. Sicherheitspapier nach Anspruch 32 oder 33, **dadurch gekennzeichnet, dass**, das Trägersubstrat (3) Papier und/oder eine Kunststofffolie umfasst.

35. Wertgegenstand, wie Markenartikel, Wertdokument oder dergleichen, der mit wenigstens einem Sicherheitselement nach wenigstens einem der Ansprüche 1 bis 31 ausgestattet ist.

36. Sicherheitspapier oder Wertgegenstand nach wenigstens einem der Ansprüche 32 bis 35, **dadurch gekennzeichnet, dass** das Sicherheitselement über einem in dem Sicherheitspapier oder Wertgegenstand (15) vorliegenden Fenster (16) angeordnet ist.

37. Sicherheitspapier oder Wertgegenstand nach Anspruch 36, **dadurch gekennzeichnet, dass** das Fenster (16) papiermacherisch hergestellt oder ausgestanzt ist.

38. Sicherheitspapier oder Wertgegenstand nach wenigstens einem der Ansprüche 32 bis 37, **dadurch gekennzeichnet, dass** das Sicherheitselement zumindest teilweise in das Sicherheitspapier oder den Wertgegenstand eingebettet vorliegt.

39. Verfahren zur Herstellung eines Sicherheitselements nach wenigstens einem der Ansprüche 1 bis 31, **dadurch gekennzeichnet, dass** eine niedrigschmelzenden, bei Raumtemperatur im Wesentlichen tackfreie Beschichtung (2, 22) auf ein Substrat (1, 21) zumindest teilweise aufgebracht wird.

40. Verfahren nach Anspruch 39, **dadurch gekennzeichnet, dass** die bei Raumtemperatur im Wesentlichen tackfreie Beschichtung (2,22) zumindest physikalisch getrocknet wird.

41. Verfahren nach Anspruch 39 oder 40, **dadurch gekennzeichnet, dass** die bei Raumtemperatur im Wesentlichen tackfreie Beschichtung (2, 22) als wässrige Dispersion aufgebracht wird.

42. Verfahren nach Anspruch 39 oder 40, **dadurch gekennzeichnet, dass** als die bei Raumtemperatur im Wesentlichen tackfreie Beschichtung ein kationisch strahlenhärtendes Harz aufgebracht wird.

43. Verfahren nach wenigstens einem der Ansprüche 39 bis 42, **dadurch gekennzeichnet, dass** vor Aufbringung der bei Raumtemperatur im Wesentlichen tackfreien Beschichtung (2) wenigstens eine weitere Schicht (4, 5, 6, 7) auf das Substrat (1) wenigstens bereichsweise aufgebracht wird.

44. Verfahren nach Anspruch 43, **dadurch gekennzeichnet, dass** die weitere Schicht (4) eine mittels Strahlung vernetzbare Schicht ist, die vor Aufbringung der bei Raumtemperatur im Wesentlichen tackfreien Beschichtung (2) mittels Strahlung zumindest teilweise vorvernetzt wird.

45. Verfahren nach wenigstens einem der Ansprüche 39 bis 42, **dadurch gekennzeichnet, dass** die bei Raumtemperatur im Wesentlichen tackfreie Beschichtung (22) mit einer Druckfarbe (9) bedruckt und anschließend mittels Strahlung vernetzt wird.

46. Verfahren nach wenigstens einem der Ansprüche 39 bis 42, **dadurch gekennzeichnet, dass** die bei Raumtemperatur im Wesentlichen tackfreie Beschichtung (22) mittels Strahlung vernetzt und anschließend mit einer Druckfarbe (9) bedruckt wird.

47. Verfahren nach wenigstens einem der Ansprüche 39 bis 42, **dadurch gekennzeichnet, dass** die bei Raumtemperatur im Wesentlichen tackfreie Beschichtung (22) mittels Strahlung vorvernetzt, anschließend mit einer Druckfarbe (9) bedruckt und schließlich mittels Strahlung vollständig vernetzt wird.

48. Verfahren nach wenigstens einem der Ansprüche 39 bis 47, **dadurch gekennzeichnet, dass** die bei Raumtemperatur im Wesentlichen tackfreie Beschichtung (2, 22) durch ultraviolette Strahlung oder Elektronenstrahlung vernetzt wird.

49. Verfahren zur Herstellung eines Sicherheitspapiers oder Wertgegenstands nach wenigstens einem der Ansprüche 32 bis 38, **dadurch gekennzeichnet, dass** das Sicherheitspapier oder der Wertgegenstand mit einem Sicherheitselement nach wenigstens einem der Ansprüche 1 bis 31 ausgestattet wird.

50. Verfahren nach Anspruch 49, **dadurch gekennzeichnet, dass** das Sicherheitselement bei erhöhtem Druck und erhöhter Temperatur auf ein Trägersubstrat (3) aufgebracht und anschließend die bei Raumtemperatur im Wesentlichen tackfreie Beschichtung (2) mittels Strahlung zumindest vorvernetzt wird.

51. Verfahren nach Anspruch 49 oder 50, **dadurch gekennzeichnet, dass** die bei Raumtemperatur im Wesentlichen tackfreie Beschichtung (2) nach Entfernen des Substrats (1) mittels Strahlung vollständig vernetzt wird.

52. Verfahren nach Anspruch 49, **dadurch gekennzeichnet, dass** die bei Raumtemperatur im Wesentlichen tackfreie Beschichtung unmittelbar vor Aufbringung des Sicherheitselements auf das Sicherheitspapier oder den Wertgegenstand aus Richtung der Beschichtung mit kurzwelliger Strahlung bestrahlt wird und anschließend bei erhöhtem Druck und erhöhter Temperatur auf ein Trägersubstrat aufgebracht wird.

53. Verwendung eines Sicherheitselements nach wenigstens einem der Ansprüche 1 bis 31 zur Herstellung von Folienverbund-Banknoten.

54. Verwendung eines Sicherheitselements nach wenigstens einem der Ansprüche 1 bis 31 als Verpackungsmaterial.

## Claims

1. A security element for a security paper, a valuable article or the like, having a substrate (1), the substrate (1, 21) being at least partially furnished with a coating (2, 22) that is low-melting and substantially tack-free at room temperature, **characterized in that** the coating (2, 22) includes at least one radiation-crosslinkable component and is high-melting to infusible after irradiation.

2. The security element according to claim 1, **characterized in that** the coating (2, 22) that is substantially tack-free at room temperature is present at least physically dried.

3. The security element according to claim 1 or 2, **characterized in that** it is an areal substrate (1, 21) having two opposing main surfaces, at least one main surface of the substrate (1, 21) being at least partially furnished with the coating (2, 22) that is substantially tack-free at room temperature.

4. The security element according to at least one of claims 1 to 3, **characterized in that** the substrate (1, 21) is designed having multiple layers.

5. The security element according to at least one of claims 1 to 4, **characterized in that** the substrate (1, 21) is designed to be flexible.

6. The security element according to at least one of claims 1 to 5, **characterized in that** the coating (2, 22) is applied as a solution, emulsion or dispersion.

7. The security element according to claim 6, **characterized in that** the dispersion is an aqueous dispersion.

8. The security element according to claim 6 or 7, **characterized in that** the dispersion is chosen from the group consisting of aliphatic polyurethane dispersions, aromatic polyurethane dispersions, acrylates, anionic acrylate- modified polyurethane dispersions, polyurethane-polyether acrylates and their compounds.

9. The security element according to at least one of claims 6 to 8, **characterized in that** the solids content of the dispersion lies between 30 wt. % and 60 wt. %, preferably between 35 wt. % and 50 wt. %.

10. The security element according to at least one of claims 1 to 6, **characterized in that** the coating that is substantially tack-free at room temperature comprises a cationically radiation-curing resin.

11. The security element according to at least one of claims 1 to 10, **characterized in that** the radiation-crosslinkable component included in the coating (2, 22) that is substantially tack-free at room temperature is crosslinkable by ultraviolet radiation or electron radiation.

12. The security element according to at least one of claims 1 to 11, **characterized in that** the coating (2, 22) that is substantially tack-free at room temperature includes a photoinitiator.

13. The security element according to claim 12, **characterized in that** the photoinitiator is a water-soluble photoinitiator, a photoinitiator that is dispersible in water, or a photoinitiator that is soluble in water by means of water-compatible solvents.

14. The security element according to at least one of claims 1 to 13, **characterized in that** the security element comprises, besides the coating (2) that is substantially tack-free at room temperature, at least one further layer (4), this being a layer that is at least pre-crosslinked by means of radiation.

15. The security element according to at least one of claims 1 to 14, **characterized in that** the security element additionally comprises at least one visually and/ or machine-verifiable security feature.

16. The security element according to at least one of claims 1 to 15, **characterized in that** the visually and/ or machine-verifiable security feature comprises an optically variable effect, especially a diffraction pattern, a hologram, a color-shift effect or other interference effects.

17. The security element according to at least one of claims 1 to 16, **characterized in that** the visually and/ or machine-verifiable security feature comprises a print image, especially having positive or negative patterns or characters.

18. The security element according to at least one of claims 1 to 17, **characterized in that** the visually and/or machine-verifiable security feature comprises fluorescent substances, phosphorescent substances or magnetic substances.

19. The security element according to at least one of claims 1 to 18, **characterized in that** the substrate (1, 21) comprises a transparent plastic foil.

20. The security element according to at least one of claims 1 to 19, **characterized in that** the substrate (1, 21) comprises a paper layer.

21. The security element according to at least one of claims 1 to 20, **characterized in that** the security element exhibits a thickness of 1 µm to 100 µm, preferably a thickness of 2 µm to 50 µm.

22. The security element according to at least one of claims 1 to 21, **characterized in that** the security element comprises, besides the substrate (1) and the coating (2) that is substantially tack-free at room temperature, at least one further layer, this being a layer that is reflective at least in some areas.

23. The security element according to at least one of claims 1 to 22, **characterized in that** the security element comprises, besides the substrate (1) and the coating (2) that is substantially tack-free at room temperature, at least one further layer, this being a layer (6) in which a diffraction pattern is embossed in the form of a relief.

24. The security element according to at least one of claims 1 to 23, **characterized in that,** in the coating (2) that is substantially tack-free at room temperature, a diffraction pattern is embossed in the form of a relief (11).

25. The security element according to at least one of claims 1 to 24, **characterized in that** the coating (2) that is substantially tack-free at room temperature is present in a form (12) that is cured in some areas and is provided with a diffraction pattern in the form of a relief (11).

26. The security element according to at least one of claims 23 to 25, **characterized in that** at least the areas provided with a diffraction pattern are provided at least in some areas with a reflective layer (7).

27. The security element according to at least one of claims 1 to 26, **characterized in that** the security element comprises, besides the substrate (1) and the coating (2) that is substantially tack-free at room temperature, at least one further layer, this being a separation layer (5).

28. The security element according to claim 27, **characterized in that** the separation layer (5) is disposed between the substrate (1) and the coating (2) that is substantially tack-free at room temperature.

29. The security element according to at least one of claims 1 to 28, **characterized in that** the coating (22) that is substantially tack-free at room temperature is present printed on with printing ink (9) and crosslinked by means of radiation.

30. The security element according to at least one of claims 1 to 29, **characterized in that** the security element is formed in the form of a security band, a security strip, a patch or another areal security element.

31. The security element according to at least one of claims 1 to 29, **characterized in that** the substrate is present in the form of fibers, the fibers being surrounded by the coating that is substantially tack-free at room temperature.

32. A security paper for manufacturing security or value documents, such as banknotes, checks, identification cards or the like, that is furnished with a security element according to at least one of claims 1 to 31.

33. The security paper according to claim 32, **characterized in that** the security paper exhibits, besides the security element, an additional carrier substrate (3).

34. The security paper according to claim 32 or 33, **characterized in that** the carrier substrate (3) comprises paper and/or a plastic foil.

35. A valuable article, such as a branded article, value document or the like that is furnished with at least one security element according to at least one of claims 1 to 31.

36. The security paper or valuable article according to at least one of claims 32 to 35, **characterized in that** the security element is disposed on top of a window (16) that is present in the security paper or valuable article (15).

37. The security paper or valuable article according to claim 36, **characterized in that** the window (16) is manufactured with papermaking technology or diecut.

38. The security paper or valuable article according to at least one of claims 32 to 37, **characterized in that** the security element is present at least partially embedded in the security paper or the valuable article.

39. The method for manufacturing a security element according to at least one of claims 1 to 31, **characterized in that** a low-melting coating (2, 22) that is substantially tack-free at room temperature is applied at least partially to a substrate.

40. The method according to claim 39, **characterized in that** the coating (2, 22) that is substantially tack-free at room temperature is at least physically dried.

41. The method according to claim 39 or 40, **characterized in that** the coating (2, 22) that is substantially tack-free at room temperature is applied as an aqueous dispersion.

42. The method according to claim 39 or 40, **characterized in that** a cationically radiation-curing resin is applied as the coating that is substantially tack-free at room temperature.

43. The method according to at least one of claims 39 to 42, **characterized in that**, prior to applicaton of the coating (2) that is substantially tack-free at room temperature, at least one further layer (4, 5, 6, 7) is applied to the substrate (1) in at least some areas.

44. The method according to claim 43, **characterized in that** the further layer (4) is a layer that is crosslinkable by means of radiation and that is at least partially pre-crosslinked by means of radiation prior to the application of the coating (2) that is substantially tack-free at room temperature.

45. The method according to at least one of claims 39 to 42, **characterized in that** the coating (22) that is substantially tack-free at room temperature is printed on with a printing ink (9) and subsequently crosslinked by means of radiation.

46. The method according to at least one of claims 39 to 42, **characterized in that** the coating (22) that is substantially tack-free at room temperature is crosslinked by means of radiation and subsequently printed on with a printing ink (9).

47. The method according to at least one of claims 39 to 42, **characterized in that** the coating (22) that is substantially tack-free at room temperature is pre-crosslinked by means of radiation, subsequently printed on with a printing ink (9), and finally completely crosslinked by means of radiation.

48. The method according to at least one of claims 39 to 47, **characterized in that** the coating (2, 22) that is substantially tack-free at room temperature is crosslinked by ultraviolet radiation or electron radiation.

49. A method for manufacturing a security paper or valuable article according to at least one of claims 32 to 38, **characterized in that** the security paper or the valuable article is furnished with a security element according to at least one of claims 1 to 31.

50. The method according to claim 49, **characterized in that** the security element is applied at elevated pressure and elevated temperature to a carrier substrate (3) and, subsequently, the coating (2) that is substantially tack-free at room temperature is at least pre-crosslinked by means of radiation.

51. The method according to claim 49 or 50, **characterized in that,** after the removal of the substrate (1), the coating (2) that is substantially tack-free at room temperature is completely crosslinked by means of radiation.

52. The method according to claim 49, **characterized in that** the coating that is substantially tack-free at room temperature is irradiated with short-wave radiation from the direction of the coating immediately prior to the application of the security element to the security paper or the valuable article, and subsequently, is applied at elevated pressure and elevated temperature to a carrier substrate.

53. A use of a security element according to at least one of claims 1 to 31 for manufacturing foil composite banknotes.

54. A use of a security element according to at least one of claims 1 to 31 as packaging material.

## Revendications

1. Elément de sécurité pour un papier de sécurité, un objet de valeur ou analogues, comportant un substrat (1), le substrat (1, 21) étant pourvu, au moins partiellement, d'un revêtement (2, 22) à bas point de fusion, pour l'essentiel sec au toucher à la température ambiante, **caractérisé en ce que** le revêtement (2, 22) contient au moins un composant durcissable par rayonnement et, après exposition, est compris dans un état à haut point de fusion et un état infusible.

2. Elément de sécurité selon la revendication 1, **caractérisé en ce que** le revêtement (2, 22) pour l'essentiel sec au toucher à la température ambiante se présente au moins sous une forme séchée par voie physique.

3. Elément de sécurité selon la revendication 1 ou 2, **caractérisé en ce qu'**il s'agit d'un substrat bidimensionnel (1, 21) comportant deux surfaces principales opposées, au moins une surface principale du substrat (1, 21) étant au moins partiellement pourvue du revêtement (2, 22) pour l'essentiel sec au toucher à la température ambiante.

4. Elément de sécurité selon au moins l'une des revendications 1 à 3, **caractérisé en ce que** le substrat (1, 21) a une structure multicouche.

5. Elément de sécurité selon au moins l'une des revendications 1 à 4, **caractérisé en ce que** le substrat (1, 21) a une structure souple.

6. Elément de sécurité selon au moins l'une des revendications 1 à 5, **caractérisé en ce que** le revêtement (2, 22) est appliqué sous forme d'une solution, d'une émulsion ou d'une dispersion.

7. Elément de sécurité selon la revendication 6, **caractérisé en ce que**, pour ce qui concerne la dispersion, il s'agit d'une dispersion aqueuse.

8. Elément de sécurité selon la revendication 6 ou 7, **caractérisé en ce que** la dispersion est choisie dans le groupe constitué des dispersions de polyuréthane aliphatiques, des dispersions de polyuréthane aromatiques, des acrylates, des dispersions de polyuréthane anioniques à modification acrylate, des polyétheracrylates de polyuréthane et de leurs mélanges.

9. Elément de sécurité selon au moins l'une des revendications 6 à 8, **caractérisé en ce que** la teneur en extrait sec de la dispersion est comprise entre 30 % en poids et 60 % en poids, de préférence entre 35 % en poids et 50 % en poids.

10. Elément de sécurité selon au moins l'une des revendications 1 à 6, **caractérisé en ce que** le revêtement pour l'essentiel sec au toucher à la température ambiante comprend une résine durcissant par voie cationique par rayonnement.

11. Elément de sécurité selon au moins l'une des revendications 1 à 10, **caractérisé en ce que** le composant réticulable par rayonnement, contenu dans le revêtement (2, 22) pour l'essentiel sec au toucher à la température ambiante, est réticulable sous l'effet d'un rayonnement ultraviolet ou d'un faisceau d'électrons.

12. Elément de sécurité selon au moins l'une des revendications 1 à 11, **caractérisé en ce que** le revêtement (2, 22) pour l'essentiel sec au toucher à la température ambiante contient un photoamorceur.

13. Elément de sécurité selon la revendication 12, **caractérisé en ce que**, pour ce qui concerne le photoamorceur, il s'agit d'un photoamorceur soluble dans l'eau, d'un photoamorceur dispersible dans l'eau ou d'un photoamorceur soluble dans l'eau à l'aide de solvants compatibles avec l'eau.

14. Elément de sécurité selon au moins l'une des revendications 1 à 13, **caractérisé en ce que** l'élément de sécurité comprend, outre le revêtement (2) pour l'essentiel sec au toucher à la température ambiante, au moins une couche supplémentaire (4), pour ce qui concerne laquelle il s'agit d'une couche au moins pré-réticulée par rayonnement.

15. Elément de sécurité selon au moins l'une des revendications 1 à 14, **caractérisé en ce que** l'élément de sécurité comprend en outre au moins une caractéristique de sécurité pouvant être contrôlée à l'oeil nu et/ou à la machine.

16. Elément de sécurité selon au moins l'une des revendications 1 à 15, **caractérisé en ce que** la caractéristique de sécurité pouvant être contrôlée à l'oeil nu et/ou à la machine comprend un effet optiquement variable, en particulier un motif de diffraction, un hologramme, un effet goniochromatique, ou d'autres effets d'interférence.

17. Elément de sécurité selon au moins l'une des revendications 1 à 16, **caractérisé en ce que** la caractéristique de sécurité pouvant être contrôlée à l'oeil nu et/ou à la machine comprend une image imprimée, en particulier avec des motifs ou signes positifs ou négatifs.

18. Elément de sécurité selon au moins l'une des revendications 1 à 17, **caractérisé en ce que** la caractéristique de sécurité pouvant être contrôlée à l'oeil nu et/ou à la machine comprend des substances fluorescentes, des substances phosphorescentes ou des substances magnétiques.

19. Elément de sécurité selon au moins l'une des revendications 1 à 18, **caractérisé en ce que** le substrat (1, 21) comprend une feuille plastique transparente.

20. Elément de sécurité selon au moins l'une des revendications 1 à 19, **caractérisé en ce que** le substrat (1, 21) comprend une couche de papier.

21. Elément de sécurité selon au moins l'une des revendications 1 à 20, **caractérisé en ce que** l'élément de sécurité présente une épaisseur de 1 µm à 100 µm, de préférence une épaisseur de 2 µm à 50 µm.

22. Elément de sécurité selon au moins l'une des revendications 1 à 21, **caractérisé en ce que** l'élément de sécurité comprend, outre le substrat (1) et le revêtement (2) pour l'essentiel sec au toucher à la température ambiante, au moins une couche supplémentaire, pour ce qui concerne laquelle il s'agit d'une couche réfléchissante au moins par zones.

23. Elément de sécurité selon au moins l'une des revendications 1 à 22, **caractérisé en ce que** l'élément de sécurité comprend, outre le substrat (1) et le revêtement (2) pour l'essentiel sec au toucher à la température ambiante, au moins une couche supplémentaire, pour ce qui concerne laquelle il s'agit d'une couche (6) dans laquelle une structure de diffraction a été incrustée sous forme d'un relief.

24. Elément de sécurité selon au moins l'une des revendications 1 à 23, **caractérisé en ce qu'**une structure de diffraction se présentant sous forme d'un relief (11) est incrustée dans le revêtement (2) pour l'essentiel sec au toucher à la température ambiante.

25. Elément de sécurité selon au moins l'une des revendications 1 à 24, **caractérisé en ce que** le revêtement (2) pour l'essentiel sec au toucher à la température ambiante se présente sous une forme (12) durcie par zones, et est pourvu d'une structure de diffraction sous forme d'un relief (11).

26. Elément de sécurité selon au moins l'une des revendications 23 à 25, **caractérisé en ce qu'**au moins les zones pourvues d'une structure de diffraction sont pourvues, au moins par zones, d'une couche réfléchissante.

27. Elément de sécurité selon au moins l'une des revendications 1 à 26, **caractérisé en ce que** l'élément de sécurité comprend, outre le substrat (1) et le revêtement (2) pour l'essentiel sec au toucher à la température ambiante, au moins une couche supplémentaire, pour ce qui concerne laquelle il s'agit d'une couche de séparation (5).

28. Elément de sécurité selon la revendication 27, **caractérisé en ce que** la couche de séparation (5) est disposée entre le substrat (1) et le revêtement (2) pour l'essentiel sec au toucher à la température ambiante.

29. Elément de sécurité selon au moins l'une des revendications 1 à 28, **caractérisé en ce que** le revêtement (22) pour l'essentiel sec au toucher à la température ambiante est imprimé par une encre d'imprimerie (9), et se présente sous forme réticulée par un rayonnement.

30. Elément de sécurité selon au moins l'une des revendications 1 à 29, **caractérisé en ce que** l'élément de sécurité se présente sous forme d'une bande de sécurité, d'une bandelette de sécurité, d'une pastille, ou d'un autre élément de sécurité bidimensionnel.

31. Elément de sécurité selon au moins l'une des revendications 1 à 29, **caractérisé en ce que** le substrat se présente sous forme de fibres, les fibres étant entourées du revêtement pour l'essentiel sec au toucher à la température ambiante.

32. Papier de sécurité pour la fabrication de documents de sécurité ou de documents de valeur tels que des billets de banque, des chèques, des cartes d'identité, des certificats ou analogues, qui est pourvu d'un élément de sécurité selon au moins l'une des revendications 1 à 31.

33. Papier de sécurité selon la revendication 32, **caractérisé en ce que** le papier de sécurité comprend, outre l'élément de sécurité, un substrat support (3) supplémentaire.

34. Papier de sécurité selon la revendication 32 ou 33, **caractérisé en ce que** le substrat support (3) comprend du papier et/ou une feuille plastique.

35. Objet de valeur tel qu'un article de marque, un document de valeur ou analogues, qui est pourvu d'au moins un élément de sécurité selon au moins l'une des revendications 1 à 31.

36. Papier de sécurité ou objet de valeur selon au moins l'une des revendications 32 à 35, **caractérisé en ce que** l'élément de sécurité est disposé au-dessus d'une fenêtre (16), présente dans le papier de sécurité ou dans l'objet de valeur (15).

37. Papier de sécurité ou objet de valeur selon la revendication 36, **caractérisé en ce que** la fenêtre (16) est fabriquée ou estampée par voie papetière.

38. Papier de sécurité ou objet de valeur selon au moins l'une des revendications 32 à 37, **caractérisé en ce que** l'élément de sécurité est présent au moins partiellement noyé dans le papier de sécurité ou l'objet de valeur.

39. Procédé de fabrication d'un élément de sécurité selon au moins l'une des revendications 1 à 31, **caractérisé en ce qu'**on applique au moins partiellement sur un substrat (1, 21) un revêtement (2, 22), à bas point de fusion, pour l'essentiel sec au toucher à la température ambiante.

40. Procédé selon la revendication 39, **caractérisé en ce que** le revêtement (2, 22) pour l'essentiel sec au toucher à la température ambiante subit un séchage au moins par voie physique.

41. Procédé selon la revendication 39 ou 40, **caractérisé en ce que** le revêtement (2, 22) pour l'essentiel sec au toucher à la température ambiante est appliqué sous forme d'une dispersion aqueuse.

42. Procédé selon la revendication 39 ou 40, **caractérisé en ce que**, en tant que revêtement pour l'essentiel sec au toucher à la température ambiante, on applique une résine durcissable par voie cationique par rayonnement.

43. Procédé selon au moins l'une des revendications 39 à 42, **caractérisé en ce que,** avant application du revêtement (2) pour l'essentiel sec au toucher à la température ambiante, on applique au moins par zones au moins une couche supplémentaire (4, 5, 6, 7) sur le substrat (1).

44. Procédé selon la revendication 43, **caractérisé en ce que** la couche supplémentaire (4) est une couche réticulable par rayonnement, qui avant application du revêtement (2) pour l'essentiel sec au toucher à la température ambiante a subi au moins partiellement une pré-réticulation par rayonnement.

45. Procédé selon au moins l'une des revendications 39 à 42, **caractérisé en ce que** le revêtement (22) pour l'essentiel sec au toucher à la température ambiante est imprimé par une encre d'imprimerie (9), puis est réticulé par rayonnement.

46. Procédé selon au moins l'une des revendications 39 à 42, **caractérisé en ce que** le revêtement (22) pour l'essentiel sec au toucher à la température ambiante est réticulé par rayonnement puis est imprimé par une encre d'imprimerie (9).

47. Procédé selon au moins l'une des revendications 39 à 42, **caractérisé en ce que** le revêtement (22) pour l'essentiel sec au toucher à la température ambiante est pré-réticulé par rayonnement, puis est imprimé par une encre d'imprimerie (9), et finalement est entièrement réticulé par rayonnement.

48. Procédé selon au moins l'une des revendications 39 à 47, **caractérisé en ce que** le revêtement (2, 22) pour l'essentiel sec au toucher à la température ambiante est réticulé par un rayonnement ultraviolet ou un faisceau d'électrons.

49. Procédé de fabrication d'un papier de sécurité ou d'un objet de valeur selon au moins l'une des revendications 32 à 38, **caractérisé en ce que** le papier de sécurité ou l'objet de valeur est pourvu d'un élément de sécurité selon au moins l'une des revendications 1 à 31.

50. Procédé selon la revendication 49, **caractérisé en ce que** l'élément de sécurité est appliqué sur un substrat support (3) sous pression élevée et à haute température, puis le revêtement (2) pour l'essentiel sec au toucher à la température ambiante est au moins pré-réticulé par rayonnement.

51. Procédé selon la revendication 49 ou 50, **caractérisé en ce que** le revêtement (2) pour l'essentiel sec au toucher à la température ambiante est, après élimination du substrat (1), entièrement réticulé par rayonnement.

52. Procédé selon la revendication 49, **caractérisé en ce que** le revêtement pour l'essentiel sec au toucher à la température ambiante est, immédiatement avant application de l'élément de sécurité sur le papier de sécurité ou l'objet de valeur, exposé, dans la direction de l'application du revêtement, à un rayonnement à courte longueur d'onde, puis est appliqué sur un substrat support sous pression élevée et à haute température.

53. Utilisation d'un élément de sécurité selon au moins l'une des revendications 1 à 31 pour fabriquer des billets de banque à feuille composite.

54. Utilisation d'un élément de sécurité selon au moins l'une des revendications 1 à 31 en tant que matériau d'emballage.
